(19) Europäisches Patentamt
European Patent Office
Office européen des brevets

(11) EP 2 830 764 B1

(12) EUROPÄISCHE PATENTSCHRIFT

(45) Veröffentlichungstag und Bekanntmachung des Hinweises auf die Patenterteilung:
09.05.2018 Patentblatt 2018/19

(21) Anmeldenummer: 13712297.4

(22) Anmeldetag: 27.03.2013

(51) Int Cl.:
B01L 3/00 (2006.01)     F16K 99/00 (2006.01)
G02B 26/00 (2006.01)     B01D 35/06 (2006.01)
B01D 61/22 (2006.01)     B01D 61/18 (2006.01)

(86) Internationale Anmeldenummer:
PCT/EP2013/056585

(87) Internationale Veröffentlichungsnummer:
WO 2013/144241 (03.10.2013 Gazette 2013/40)

(54) **FLUIDISCHES SYSTEM UMFASSEND EINE PORÖSE MEMBRAN MIT VERÄNDERBARER PORENOBERFLÄCHE UND VERFAHREN ZUM BETREIBEN DESSELBEN**

FLUIDIC SYSTEM COMPRISING A POROUS MEMBRANE WITH A VARIABLE PORE SURFACE AND METHOD FOR OPERATING THE SAME

SYSTÈME FLUIDIQUE COMPRENANT UNE MEMBRANE POREUSE À SURFACE DE PORE VARIABLE ET MÉTHODE D'OPÉRATION DE CE SYSTÈME

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 27.03.2012 DE 102012204925

(43) Veröffentlichungstag der Anmeldung:
04.02.2015 Patentblatt 2015/06

(73) Patentinhaber: Fraunhofer-Gesellschaft zur Förderung der angewandten Forschung e.V.
80686 München (DE)

(72) Erfinder:
• BASSLER, Michael
  55127 Mainz (DE)
• DRESE, Klaus, Stefan
  55130 Mainz (DE)
• LATTA, Daniel
  55128 Mainz (DE)

(74) Vertreter: Mehler Achler
Patentanwälte Partnerschaft mbB
Bahnhofstraße 67
65185 Wiesbaden (DE)

(56) Entgegenhaltungen:
WO-A1-2012/018301     US-A1- 2009 188 794
US-A1- 2011 091 989     US-A1- 2011 266 151
US-B1- 6 406 605

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein fluidisches System, insbesondere ein mikrofluidisches System, mit einem ersten Volumen, einem zweiten Volumen und einer die beiden Volumina geometrisch trennenden Membran, die eine offenporige Mikrostruktur mit einer Porenoberfläche für den Durchtritt eines ersten Mediums und eines zweiten Mediums bereitstellt, zwischen denen eine Grenzfläche ausgebildet ist, wobei zwischen der Grenzfläche und der Porenoberfläche ein Kontaktwinkel besteht. Die Erfindung betrifft ferner ein Verfahren zum Betreiben eines solchen.

Ein "fluidisches System" im Sinne dieser Schrift setzt sich aus wenigstens drei Komponenten zusammen: Einer formstabilen, körperlichen Einrichtung, also einem Festkörper, einem ersten Medium oder Fluid und einem zweiten Medium oder Fluid. Zu dem Festkörper gehört ein Substrat, in das eine oder mehrere Fluidleitungen eingearbeitet sind, und eine die Fluidleitung räumlich in zwei Abschnitte, nämlich das erste und das zweite Volumen, trennende Membran.

Als "Volumen" im Sinne der vorliegenden Schrift wird im Allgemeinen ein Hohlraum zur räumlichen Einfassung der Medien verstanden, auch hierfür wird im Folgenden der Begriff "Fluidleitung" synonym verwendet.

Als "Membran" wird ganz allgemein ein Festkörper bezeichnet, der geeignet ist, jene räumliche oder geometrische Trennung und zugleich eine Barriere zu schaffen, die geeignet ist, wenigstens einem durchströmenden Medium einen erhöhten Strömungswiderstand entgegenzusetzen, genauer die beiden Medien unter verschiedenen Bedingungen passieren zu lassen. Eine unterschiedliche Bedingung, unter denen die beiden Medien passieren, ist beispielsweise die zum Passieren benötigte Druckdifferenz. Damit die Medien passieren können, wird verlangt, dass die Membran eine "offenporige" Struktur und genauer eine offenporige Mikro- oder Nanostruktur aufweist. Dementsprechend werden als "Poren" allgemein für die Medien durchlässige Öffnungen bezeichnet. Eine Membran kann beispielsweise in Form eines Gitters, eines Faserverbundes, eines Geflechts, einer waben- oder schwammartigen Struktur, eines Metallschaums oder dergleichen vorliegen. Wesentlich ist nur, dass die Strukturen eben offenporig sind. Die Membran und das Substrat der Fluidleitung sind bevorzugt nicht einstückig und auch nicht aus demselben Material gefertigt.

Die beiden Medien sind in der Fluidleitung benachbart angeordnet und definieren die "Grenzfläche" oder auch "Phasengrenze". Die beiden "Medien" werden auch als Fluid oder Phase bezeichnet. Es kann sich dabei um zwei Flüssigkeiten, wie beispielsweise eine wasser- und eine ölbasierte Flüssigkeit, oder eine Flüssigkeit und ein Gas, wie beispielweise Luft, handeln. In letzterem Fall wird anstelle von einer Grenzfläche oder Phasengrenze auch von einer "Oberfläche" gesprochen. Entscheidendes Kriterium ist, dass sich die beiden Medien nicht ineinander lösen, chemisch miteinander verbinden oder vollständig mischen.

Ein "mikrofluidisches System" zeichnet sich durch die Handhabung von Flüssigkeitsvolumina im Bereich von 1 ml und darunter, in der Regel jedoch nicht wesentlich unter einem $\mu$l aus. Dementsprechend sind darin Fluidkanäle vorgesehen, die mehrheitlich oder zumindest vielfach Querschnitte und/oder Strukturen mit Abmessungen im Bereich von 1 mm oder weniger aufweisen.

Die Erfindung setzt sich mit der Wechselwirkung zwischen den beiden Medien und dem Festkörpermaterial der Membran, genauer der Oberfläche der Membranporen auseinander.

Ein solches System ist beispielsweise in der Offenlegungsschrift DE 10 2009 045 403 A1 beschrieben. Die Vorrichtung dient dort zum Trennen von Gas und Flüssigkeit oder allgemeiner zum Abtrennen einer dispersen Phase von einer kontinuierlichen Phase und weist zu diesem Zweck einen Zuführkanal und einen Abführkanal für das Gas-Flüssigkeits-Gemisch auf. Zwischen den beiden Kanälen ist eine Membran in Form von mehreren Kapillarkanälen angeordnet, die den Zuführkanal mit dem Abführkanal verbinden. Die Trennung der beiden Phasen geschieht über eine Steuerung der Druckdifferenz zwischen dem ersten und dem zweiten Kanal unter Berücksichtigung der Kapillarkräfte in den Kapillarkanälen, wobei das Benetzungsverhalten dafür sorgt, dass das Gas aufgrund der Oberflächenspannung entweder vor oder in den Kapillarkanälen zurückgehalten und gesammelt wird, bis alle Kapillarkanäle durch die sich vergrößernde Gasblase versperrt sind. Hierauf folgt ein Druckanstieg, mit dem die Gasblase schließlich unter Überwindung der Oberflächenspannung durch die Kapillarkanäle entleert wird. Diese Vorrichtung kann einerseits zur Bestimmung der Position einer Gasansammlung, zur Bestimmung der Position eines Flüssigkeitstropfens oder zum Trennen des Gas-Flüssigkeits-Gemischs verwendet werden. Je nach Anwendung kann bei diesem oder ähnlichen Systemen nachteilig sein, dass die Membranen aufgrund des Benetzungsverhaltens den Transport der Flüssigkeit beim Eintritt in oder beim Austritt aus der Membran so sehr behindern, dass bei solchen Trocken-Nass-Trocken-Wechseln hohe Drücke bzw. Druckdifferenzen erforderlich sind. In manchen Anwendungen können die erforderlichen Druckdifferenzen in einem mikrofluidischen System nicht bereitgestellt werden oder die Membranen können diesen mechanisch nicht standhalten oder sie führen beim Durchbrechen der Flüssigkeit durch die Membran zu einem unkontrollierten Flüssigkeitstransport. Zudem kann es passieren, dass die Kapillarkanäle beim Durchbrechen nicht zwangsläufig vollständig geleert werden, sodass unerwünschte Flüssigkeitsreste an und in der Membran zurückbleiben.

Aufgabe der Erfindung ist es, in einem fluidischen System der eingangs genannten Art Mittel zur Verfügung zu stellen, die die Funktion der Membran bereitstellen und zugleich eine sichere Fluidkontrolle gewährleisten.

Die Aufgabe wird durch ein fluidisches System mit den Merkmalen des Patentanspruchs 1 und ein Verfahren mit den Merkmalen des Patentanspruchs 6 gelöst. Vorteilhafte Weiterbildung der Erfindung ist Gegenstand der Unteransprüche.

Das fluidische System der eingangs genannten Art ist gekennzeichnet durch Elektroden zum Anlegen eines elektrischen Feldes im Bereich der Membran. Die Membran weist in einem ersten Zustand $Z_1$ mit einem ersten elektrischen Feld $E_1$ eine von dem ersten Medium nicht oder weniger benetzende und von dem zweiten Medium stärker benetzende Porenoberfläche auf, so dass sich zwischen der Porenoberfläche und der Grenzfläche im ersten Medium ein erster Kontaktwinkel $\Theta_1 > 90°$ ausbildet. Das erste Medium und das zweite Medium und die Porenoberfläche weisen jeweils eine spezifische Oberflächenenergie, die auch als freie Energie der Oberfläche bezeichnet wird und die bei flüssigen Medien mit deren Oberflächenspannung gleichgesetzt werden kann, auf, von denen mindestens eine Oberflächenenergie in Abhängigkeit von dem elektrischen Feld derart reversibel veränderbar ist, dass sich in einem zweiten Zustand $Z_2$ mit einem zweiten elektrischen Feld $E_2 \neq E_1$ zwischen der Porenoberfläche und der Grenzfläche ein zweiter Kontaktwinkel $\Theta_2 < \Theta_1$ einstellt.

Dieses System umfasst beispielsweise ein erstes Medium, beispielsweise Wasser, das eine stärkere Polarität als das zweite Medium, beispielsweise Öl oder Luft, aufweist. Zwischen den Medien und der Porenoberfläche stellen sich im ersten Zustand erfindungsgemäß Wechselwirkungen ein, aufgrund derer das erste Medium die Porenoberfläche weniger benetzt als das zweite Medium. Im zweiten Zustand stellen sich hingegen Wechselwirkungen ein, aufgrund derer das erste Medium die Porenoberfläche zumindest stärker benetzt als zuvor und idealer Weise sogar stärker benetzt als das zweite Medium. Das System beschreibt insoweit aber auch den umgekehrten Fall, in dem das erste Medium, beispielsweise Öl oder Luft, weniger polar ist als das zweite Medium, beispielsweise Wasser, wobei sich zwischen den Medien und der Porenoberfläche aufgrund einer nun anderen Oberflächenenergie der Porenoberfläche im ersten Zustand wiederum Wechselwirkungen einstellen, aufgrund derer das unpolarere erste Medium die Porenoberfläche weniger benetzt als das zweite Medium. Die andere Oberflächenenergie der Porenoberfläche kann durch Verwendung eines anderen Ausgangsmaterials für die Porenoberfläche und/oder durch Wahl eines anderen Zustands $Z_1$ erzielt werden.

Der Kontaktwinkel zwischen der Grenzfläche beider Medien und der Oberfläche drückt das Verhältnis der Benetzbarkeit der Porenoberfläche mit dem ersten Medium zu der Benetzbarkeit der Porenoberfläche mit dem zweiten Medium aus. Ist die Porenoberfläche von dem ersten Medium, beispielsweise Wasser, weniger benetzbar als von dem zweiten Medium, beispielsweise Luft - ist die Oberfläche also hydrophob - so kann dieser Umstand durch einen Kontaktwinkel > 90° ausgedrückt werden. Dasselbe gilt bei umgekehrter Zuordnung: Ist das erste, weniger benetzende Medium Luft und das zweite stärker benetzende Medium Wasser - ist die Oberfläche also hydrophil - so wird auch dieser Umstand durch einen Kontaktwinkel $\Theta_1 > 90°$ ausgedrückt. Dementsprechend ist der Kontaktwinkel zwischen der Porenoberfläche und der Grenzfläche $\Theta_1$ wie auch $\Theta_2$ nach vorstehender Definition jeweils "im ersten Medium" zwischen der Porenoberfläche und der Grenzfläche aufgetragen.

Das erste Medium wird also ohne äußere Druckeinwirkung nicht in die Poren der Membran eindringen. Um das Medium 1 in die Poren der Membran zu zwingen ist deshalb ein Überdruck oder eine Druckdifferenz erforderlich, deren Maß von den Oberflächenspannungen der Medien und der Porengeometrie abhängt.

Die Erfindung macht sich die Erkenntnis zu Nutze, dass die erforderliche Druckdifferenz aber auch durch ein Manipulieren des Kontaktwinkels beeinflusst werden kann.

Das Verändern der wenigstens einen Oberflächenenergie jener Porenoberfläche und/oder der Medien - es kommt dabei grundsätzlich auf eine relative Änderung der Oberflächenenergien zueinander an - und damit das Verändern der Benetzbarkeit ist beispielsweise in Form des "Electro-Wetting" ("Elektrobenetzen") bekannt. Diesbezüglich wird beispielhaft auf die Schrift WO 2009/094626A1 verwiesen, die sich damit befasst, einen Tropfen in ein poröses Substrat mit einer anfangs nichtbenetzenden wabenförmigen Porenstruktur und einer darunterliegenden faserartigen benetzenden Dochtstruktur einsickern zu lassen. Die wabenförmige Porenstruktur ist aus einem metallischen Kerngerüst aufgebaut, welches mit einem dielektrischen Material und darüber mit einer nicht-benetzenden Beschichtung versehen ist. Die metallische Grundstruktur ist elektrisch kontaktiert. Eine elektrische Gegenelektrode wird mit dem Tropfen verbunden. Wird zwischen der metallischen Grundstruktur und dem Tropfen eine Spannung angelegt, so schaltet der Zustand des Systems um und der Tropfen benetzt die Oberfläche der Wabenstruktur, dringt in diese ein und gelangt bis in die darunterliegende benetzende Dochtstruktur.

Auch die Schriften WO 96/12540 A1 und WO 96/12541 A1 erwähnen das Elektro-Wetting in einer anderen Anwendung. Es wird ein Verfahren zum Diffusionsaustausch zweier entlang einer Membran parallel geführter und dort in Berührung stehender Fluidströme beschrieben, bei dem durch eine Veränderung der Benetzung der Membranoberfläche die Effizienz des Austauschprozesses verbessert werden soll.

Aus den Schriften US 2011/266151 A1 und WO 2012/018301 A1 sind jeweils mikrofluidische Vorrichtungen mit Ventilen bekannt, die ebenfalls ein elektrisch steuerbares Benetzungsverhalten aufweisen.

Nicht damit zu verwechseln ist der elektroosmotische Fluss durch eine Membran, bei dem eine ionische Flüssigkeit mittels elektrischem Feld senkrecht zur Membranfläche angetrieben wird, durch die Membran durchzutreten, vgl. US 6,406,605 B1.

Die vorliegende Erfindung macht sich die reversible Manipulation des Kontaktwinkels zu nutze. "Reversibel" im Sinne der Erfindung soll auch teilweise reversible Vorgänge einschließen, bei denen eine Hysterese auftritt, sodass nach dem Zurückkehren in den Ausgangszustand nicht mehr das identische Benetzungsverhältnis und somit derselbe Kontaktwinkel vorliegen muss, zumindest aber eine wesentliche Veränderung des Benetzungsverhaltens in umgekehrter Richtung eintritt.

Dementsprechend sieht das erfindungsgemäße Verfahren zum Betreiben eines fluidischen Systems mit einem ersten Volumen, einem zweiten Volumen und einer die beiden Volumina geometrisch trennenden Membran, die eine offenporige Mikrostruktur mit einer Porenoberfläche bereitstellt, folgende Schritte vor:

- Einstellen eines ersten Zustands $Z_1$ mit einem ersten elektrischen Feld $E_1$ im Bereich der Membran, in dem die Porenoberfläche, ein erstes Medium und ein zweites Medium Oberflächenenergien aufweisen und in dem die Membran eine von dem ersten Medium nicht oder weniger benetzende und von dem zweiten Medium stärker benetzende Porenoberfläche aufweist,

- Fördern des ersten Mediums und des zweiten Mediums, zwischen denen eine Grenzfläche ausgebildet ist, von dem ersten Volumen durch die Membran in das zweite Volumen bis die Grenzfläche die Membran berührt, wobei sich zwischen der Porenoberfläche und der Grenzfläche im ersten Medium ein erster Kontaktwinkel $\Theta_1 > 90°$ einstellt und die Förderung stoppt, während das erste Medium im Wesentlichen noch in dem ersten Volumen und das zweite Medium im Wesentlichen schon im zweiten Volumen verweilen,

- Einstellen eines zweiten Zustands $Z_2$ mit einem zweiten elektrischen Feld $E_2 \neq E_1$ im Bereich der Membran, in dem sich mindestens eine Oberflächenenergie derart reversibel verändert, dass sich ein zweiter Kontaktwinkel $\Theta_2 < \Theta_1$ zwischen der Porenoberfläche und der Grenzfläche einstellt,

- Weiterfördern des ersten und des zweiten Mediums, bis auch das erste Medium durch die Membran im Wesentlichen in das zweite Volumen überführt ist, wobei

- das erste Medium ein begrenztes Volumen aufweist und in Bezug auf die Förderrichtung an dessen Ende eine zweite Grenzfläche zu einem dritten Medium ausgebildet ist, wobei das Weiterfördern des ersten Mediums durch die Membran in das zweite Volumen stoppt, wenn die zweite Grenzfläche die Membran berührt und zwischen der zweiten Grenzfläche und der Porenoberfläche ein dritter Kontaktwinkel $\Theta_3$ steht.

Die Zustandsänderung ist insbesondere in Bezug auf die Temperatur vorzugsweise insoweit einzuschränken, als keines der Medien (Fluide) einen Phasenübergang durchlaufen, insbesondere nicht fest werden darf.

Eine vorteilhafte Weiterbildung der Erfindung sieht vor, dass der zweite Kontaktwinkel $\Theta_2 < 90°$ beträgt.

In diesem Fall bewirkt das Umschalten von dem Systemzustand $Z_1$ in den Zustand $Z_2$, dass das zunächst weniger benetzende erste Medium zu einem stärker benetzenden ersten Medium wird. Dies ist freilich nicht notwendig, um das erste Medium unter geringerem Druckaufwand durch die Poren der Membran zu befördern als im Zustand $Z_1$. Dennoch stellt diese Ausgestaltung einen vorteilhaften Spezialfall dar, der eine sicherere Prozessführung erlaubt.

Der erste Zustand ist bevorzugt durch ein erstes elektrisches Feld $E_1 = 0$, eine erste elektromagnetische Einstrahlung $S_1$ in Form von Tages- oder Raumbeleuchtung oder Dunkelheit und eine erste Temperatur $T_1$ im Bereich der Zimmertemperatur definiert.

Unter diesen Bedingungen, auch "Umgebungsbedingungen" genannt, erfolgt das Einstellen des ersten Zustands $Z_1$ vorzugsweise nicht aktiv, sondern wird durch die Umgebungsbedingungen selbst definiert. Ein derart definierter erster Zustand erlaubt das Betreiben beispielsweise eines mikrofluidischen Chips mit dem erfindungsgemäßen mikrofluidischen System auf einfache Weise. Ohne zunächst aktiv einzugreifen, werden das erste Medium und das zweite Medium von dem ersten Volumen durch die Membran in das zweite Volumen gefördert bis die Grenzfläche die Membran berührt und die Förderung stoppt. Durch Einschalten eines elektrischen Feldes und/oder Einstrahlung zusätzlicher elektromagnetischer Energie und/oder Erhöhung oder Absenkung der Temperatur der Porenoberfläche wird dann der der Zustand $Z_2$ hergestellt, in dem die Membran dann für das erste Medium durchlässig wird.

Eine konkretes Ausführungsbeispiel des Systems bzw. Verfahrens sieht eine Porenoberfläche vor, die in dem ersten Zustand hydrophob ist, wobei das erste Medium eine wasserbasierende Flüssigkeit ist. Eine vorteilhafte Weiterbildung desselben sieht vor, dass das zweite Medium ein Gas, insbesondere Luft, ist. Alternativ kann das zweite Medium auch eine ölbasierte Flüssigkeit sein.

Alternativ zu diesem Ausführungsbeispiel ist die Porenoberfläche in dem ersten Zustand lipophob und das erste Medium eine ölbasierte Flüssigkeit. Das zweite Medium ist in dieser Ausgestaltung vorzugsweise entweder ein Gas, insbesondere Luft, oder alternativ eine wasserbasierte Flüssigkeit.

Als weitere Alternative ist die Porenoberfläche in dem ersten Zustand hydrophil und das zweite Medium eine wasserbasierte Flüssigkeit. Das erste Medium ist dann bevorzugt eine ölbasierte Flüssigkeit oder ein Gas, insbesondere Luft.

Noch eine weitere Alternative sieht vor, dass die Porenoberfläche in dem ersten Zustand lipophil und das zweite Medium eine ölbasiert Flüssigkeit ist. Das erste Medium ist dann bevorzugt eine wasserbasierte Flüssigkeit oder ein Gas, insbesondere Luft.

Vorzugsweise weist das fluidische System eine Pumpe zur Förderung der Medien von dem ersten Volumen durch die Membran in das zweite Volumen auf.

Die Förderung kann volumengesteuert oder druckgesteuert erfolgen. Im ersten Fall erfolgt die Förderung bis zu einem maximalen Förderdruck $P_{max}$ mit einem konstanten Volumenstrom $V_c$. Die Pumpe ist in dieser Ausgestaltung der Erfindung entsprechend eingerichtet.

Der erste Kontaktwinkel $\Theta_1$ korrespondiert physikalisch mit einem Durchbruchsdruck $P_{dhi}$, bei dem die Grenzfläche durch die Membran durchtritt. Als "Durchbruchsdruck" wird hierin grundsätzlich die Druckdifferenz vor und hinter der Grenzfläche, also die Differenz zwischen den Drücken in dem ersten und dem zweiten Medium bezeichnet. Der Durchbruchsdruck steigt bedingt durch die Grenzflächenspannung der Medien mit wachsendem Kontaktwinkel und ist ansonsten im Wesentlichen Abhängigkeit von der Geometrie der Membranporen. Vorzugsweise sind der Durchbruchsdruck $P_{dhi}$ und der maximale Förderdruck $P_{max}$ so gewählt, dass der Durchbruchsdruck $P_{dhi}$ größer ist, als der maximale Förderdruck $P_{max}$.

Bei dieser Konfiguration ist sichergestellt, dass die Förderung der Medien von dem ersten Volumen durch die Membran in das zweite Volumen stoppt, sobald die Grenzfläche zwischen den beiden Medien die Membran berührt.

In einer vorteilhaften Weiterbildung der Erfindung korrespondiert der zweite Kontaktwinkel $\Theta_2$ mit einem Durchbruchsdruck $P_{dlo}$, bei dem die Grenzfläche durch die Membran durchtritt und der kleiner ist, als der maximale Förderdruck $P_{max}$.

Der Zustand $Z_2$ und damit der Kontaktwinkel $\Theta_2$ sowie der maximale Förderdruck $P_{max}$ sind also so gewählt, dass durch Umschalten von dem Zustand $Z_1$ in den Zustand $Z_2$ unter Beibehaltung der Förderbedingung, also hier des konstanten Volumenstrom $V_c$ bis zum maximalen Förderdruck $P_{max}$, die zwischen den Medien ausgebildete Grenzfläche durch die Membran transportiert und das erste und zweite Medium durch die Membran in das zweite Volumen weitergefördert werden.

Weiterhin bevorzugt weist das fluidische System einen Drucksensor auf, der angeordnet und eingerichtet ist, eine Druckänderung in dem ersten oder zweiten Volumen zu detektieren und ein Druckänderungssignal auszugeben.

Vorteilhaft ist ferner eine Steuerung vorzusehen, die eingerichtet ist, in Antwort auf das Druckänderungssignal bei Überschreiten eines Schwellendrucks in dem ersten Volumen oder Unterschreiten eines Schwellendrucks in dem zweiten Volumen ein Schaltsignal an eine Spannungsversorgung für die Elektroden oder an die elektromagnetische Strahlungsquelle oder an die Mittel zur Erwärmung der Membran auszugeben.

Verfahrensseitig wird hiermit bezweckt, dass das erste Medium und das zweite Medium von dem ersten Volumen durch die Membran in das zweite Volumen gefördert werden, bis die Grenzfläche die Membran berührt, wobei die Förderung stoppt, während das erste Medium im Wesentlichen noch in dem Volumen und das zweite Medium im Wesentlichen schon im zweiten Volumen verweilen, weil in diesem Zustand der maximale Förderdruck $P_{max}$ nicht ausreicht, die Grenzfläche durch die Membran zu treiben. Infolgedessen steigt der Druck im ersten Volumen bis auf dem maximalen Förderdruck rasch an. Entsprechend fällt er im zweiten Volumen. Diese Druckänderung wird detektiert und ein entsprechendes Signal an die Steuerung ausgegeben, die wiederum das Anlegen eines elektrischen Feldes im Bereich der Membran und/oder das Einstrahlen elektromagnetischer Strahlung auf die Membran und/oder das Erwärmen der Membran in Antwort hierauf veranlasst, also den zweiten Zustands $Z_2$ einstellt, vorausgesetzt, ein vorher bestimmter und eingestellter Schwellendruck wird überschritten. Die Zustandsänderung kann je nach Verwendungszweck auch zeitverzögert in Gang gesetzt werden. Die Zeitverzögerung kann wiederum durch die Steuerung automatisch veranlasst werden. Der Durchbruchsdruck fällt daraufhin unter den maximalen Förderdruck $P_{max}$ auf den Wert $P_{dlo}$, sodass die ersten und zweiten Medien weitergefördert werden können, bis auch das erste Medium durch die Membran in das zweite Volumen überführt ist.

Auf diese Weise kann mit einfachen Mitteln eine automatische Änderung des Kontaktwinkels zwischen der Porenoberfläche und der Grenzfläche eingeleitet werden.

Im Fall der druckgesteuerten Förderung erfolgt das Fördern mit einem konstanten Förderdruck $P_c$. Die Pumpe ist in dieser Ausgestaltung der Erfindung entsprechend eingerichtet.

Vorteilhaft ist es in diesem Fall, wenn der erste Kontaktwinkel $\Theta_1$ mit einem Durchbruchsdruck $P_{dhi}$ korrespondiert, bei dem die Grenzfläche durch die Membran durchtritt und der größer ist, als der konstante Förderdruck $P_c$. Weiterhin bevorzugt ist es, wenn der zweite Kontaktwinkel $\Theta_2$ mit einem Durchbruchsdruck $P_{dlo}$ korrespondiert, bei dem die Grenzfläche durch die Membran durchtritt und der kleiner ist als der konstante Förderdruck $P_c$.

Zum Zwecke einer automatischen Drucksteuerung ist in dieser Ausführungsform des fluidischen Systems ein Volumenstromsensor vorgesehen, der angeordnet und eingerichtet ist, eine Volumenstromänderung in dem zweiten Volumen zu detektieren und ein Volumenstromänderungssignal auszugeben.

Weiterhin bevorzugt ist in dem fluidischen System eine Steuerung vorgesehen, die eingerichtet ist, in Antwort auf das Volumen des Stromänderungssignals bei Unterschreiten eines Schwellenvolumenstromes ein Schaltsignal an eine Spannungsversorgung für die Elektroden oder an die elektromagnetische Strahlungsquelle oder an die Mittel zur Erwärmung der Membran auszugeben.

Verfahrensseitig werden somit das erste Medium und das zweite Medium von dem ersten Volumen durch die Membran in das zweite Volumen gefördert, bis die Grenzfläche die Membran berührt, wobei die Förderung stoppt, während das erste Medium im Wesentlichen noch in dem Volumen und das zweite Medium im Wesentlichen schon im zweiten Volumen verweilen, weil in diesem Zustand der konstante Förderdruck $P_c$ nicht ausreicht, die Grenzfläche durch die Membran zu treiben. Infolgedessen reißt der Volumenstrom sehr rasch ab und es wird eine Volumenstromänderung detektiert und ein entsprechendes Signal an die Steuerung ausgegeben, die wiederum das Anlegen eines elektrischen Feldes im Bereich der Membran und/oder das Einstrahlen elektromagnetischer Strahlung auf die Membran und/oder das Erwärmen der Membran in Antwort hierauf veranlasst, also den zweiten Zustands $Z_2$ einstellt, vorausgesetzt, ein vorher bestimmter und eingestellter Schwellenvolumenstrom wird unterschritten. Die Zustandsänderung kann je nach Verwendungszweck auch zeitverzögert in Gang gesetzt werden. Die Zeitverzögerung kann wiederum durch die Steuerung automatisch veranlasst werden. Der Durchbruchsdruck fällt daraufhin unter den konstanten Förderdruck $P_c$ auf den Wert $P_{dlo}$, sodass die ersten und zweiten Medien weitergefördert werden können, bis auch das erste Medium durch die Membran in das zweite Volumen überführt ist.

Das Verfahren weist vorteilhafterweise die weiteren Schritte auf:

- Einstellen eines dritten Zustands $Z_3$ mit einem dritten elektrischen Feld $E_3 \neq E_2$ im Bereich der Membran, in dem sich durch Veränderung mindestens eine Oberflächenenergie ein vierter Kontaktwinkel $\Theta_4 > \Theta_3$ zwischen der Porenoberfläche und der Grenzfläche einstellt,

- Weiterfördern des ersten Mediums in dem zweiten Volumen.

Auf die genannte Weise wird ein Ablösen der zweiten Grenzfläche zwischen dem ersten und dem dritten Medium auf dieselbe Weise erzielt, auf die bereits der Durchtritt der ersten Grenzfläche durch die Membran bewirkt wurde.

Das zweite und das dritte Medium sind vorzugsweise gleich, sodass auch der dritte Kontaktwinkel $\Theta_3$ gleich dem zweiten Kontaktwinkel $\Theta_2$ ist, jeweils bezogen auf das erste Medium.

Besonders bevorzugt sind der erste Zustand $Z_1$ und der dritte Zustand $Z_3$ gleich ($Z_1 = Z_3$). Lagen im ersten Zustand $Z_1$ vereinfachend Umgebungsbedingungen vor, dann wird der Zustand $Z_3$ eingestellt, indem das im Zustand $Z_2$ zugeschaltete elektrische Feld einfach wieder abgeschaltet werden.

Besonders sind das fluidische System und das Verfahren so ausgebildet, dass beim Einstellen des ersten Zustands $Z_1$ der erste Kontaktwinkel $\Theta_1 > 90°$ und beim Einstellen des zweiten Zustands $Z_2$ der zweite Kontaktwinkel $\Theta_2 < 90°$ beträgt. Weiterhin bevorzugt beträgt beim Einstellen des zweiten Zustand $Z_2$ der dritte Kontaktwinkel $\Theta_3 < 90°$ und beim Einstellen des dritten Zustands $Z_3$ der vierte Kontaktwinkel $\Theta_4 > 90°$.

Unter der Annahme, dass das zweite Medium und das dritte Medium gleich sind und dass der erste Zustand und der dritte Zustand gleich sind, ergibt sich dies zwangsläufig aus der Forderung, dass der erste Kontaktwinkel $\Theta_1 > 90°$ und der zweite Kontaktwinkel $\Theta_2 < 90°$ beträgt, weil dann nämlich der dritte Kontaktwinkel $\Theta_3$ identisch mit dem zweiten Kontaktwinkel $\Theta_2$ und der vierte Kontaktwinkel $\Theta_4$ gleich dem ersten Kontaktwinkel $\Theta_1$ ist.

In dem fluidischen System wird eine erste der Elektroden durch ein leitendes Substrat der Membran oder einer leitenden Beschichtung der Membran gebildet.

Beispielsweise kann dies ein Metallgitter oder Metallgewebe oder Metallschaum oder eine solche Substratstruktur aus einem leitfähigen Polymer sein. Alternativ kann die Substratstruktur auch aus einem nicht leitenden Material gefertigt sein, wie beispielsweise einer Keramik oder einem nicht leitenden Polymer, das mit einer leitenden Schicht überzogen oder beschichtet ist.

Auf der ersten Elektrode, also dem leitenden Substrat oder der leitenden Beschichtung der Membran, wird bevorzugt eine Schicht eines Dielektrikums aufgebracht.

Das Dielektrikum bildet besonders bevorzugt unmittelbar die Porenoberfläche. Alternativ kann auf dem Dielektrikum das die Oberfläche bildende Material als weitere Schicht aufgetragen werden.

Als Beschichtungsverfahren kommen zum Beispiel plasmaunterstützte Abscheidung aus der Gasphase, Schichtabscheidung aus der Flüssigphase, Bedampfen oder Besputtern in Frage. Die die Porenoberfläche bildende Beschichtung weist vorzugsweise Politetraflourethylen (PTFE), Perflourisobuthen (PFIB), Parylene auf. Eine geeignete Beschichtung wird unter dem Markennamen "lipocer" von der Firma Plasma Electronic GmbH angeboten.

Erfindungsgemäß ist in dem ersten und dem zweiten Volumen jeweils unmittelbar benachbart zu der Membran eine zweite Elektrode angeordnet.

Elektrodenanordnungen entlang einer Membran in fluidischen Systemen sind aus anderen Anwendungen grundsätzlich bekannt. So ist in der DE 10 2006 008 324 B3 beispielsweise eine Elektrodenanordnung zur Kontaktierung einer Flüssigkeit beidseits einer Membran zum Zweck des Filterns leitender Partikel beschrieben. Aus der DE 10 2005 015 562 A1 wird die Anordnung einer Messelektrode über einer Filtermembran zur Bestimmung des Filterzustandes diskutiert.

Es kommt vorliegend allerdings grundsätzlich nicht auf eine elektrisch leitende Verbindung zwischen der zweiten Elektrode und dem Medium an. Jedes elektrische Feld im Bereich des Kontaktes zwischen den Medien und der Porenoberfläche der Membran sorgt im Fall des Elektrobenetzens für eine Ladungsverschiebung und damit für eine Manipulation des Kontaktwinkels. Allerdings ist die direkte Kontaktierung der Medien sehr effizient, weil sich das Feld dadurch sehr lokal über dem Dielektrikum und damit dem Ort der Oberflächengrenzen aufbaut. Die zweite Elektrode dient deshalb in dieser bevorzugten Ausgestaltung der unmittelbaren Kontaktierung der Medien. Die unmittelbare Nähe der beiden Elektroden bewirkt am Ort der Oberflächengrenzen eine hohe Feldstärke bei geringer Spannung. Während im Zustand $Z_1$ vorzugsweise das erste elektrische Feld $E_1 = 0$ V/m beträgt, hat im Zustand $Z_1$ das zweite elektrische Feld $E_2$ vorzugsweise eine Feldstärke von 1 V/m bis 10 kV/m.

Steht beispielsweise vor der Membran ein Wassertropfen an, der durch die Membran hindurch transportiert werden soll, so muss die Positionierung der zweiten Elektrode so gewählt sein, dass der Tropfen während des Durchtretens durch die Membran ständigen Kontakt mit der zweiten Elektrode hat. Zu diesem Zweck ist die zweite Elektrode in dem ersten und dem zweiten Volumen jeweils unmittelbar benachbart zu der Membran angeordnet. Anders gesagt umspannt die zweite Elektrode den Membranbereich der Gestalt, dass sie aus zwei (zusammenhängenden oder unzusammenhängenden) Teilen gebildet wird, deren Abstand nicht größer ist als die Länge des Tropfens in dem Abschnitt der Fluidleitung zwischen den beiden Teilen, damit er während des Transportes durch die Membran zumindest zu einem Teil der zweiten Elektrode stets elektrischen Kontakt hat. Beispielhaft ist die zweite Elektrode in Form eines zusammenhängenden Metallrings an der Innenwand der Fluidleitung im Bereich der Membran ausgebildet und weist vor und hinter der Membran eine freie Oberfläche zum Kontakt mit den Medien auf. Alternativ können zwei unzusammenhängende Kontakte vor und hinter der Membran vorgesehen sein, die elektrisch leitend verbunden oder auch an separate Spannungsversorgungen angeschlossen sind.

Die elektromagnetische Strahlungsquelle ist bevorzugt eingerichtet, Licht einer Wellenlänge zwischen 0,1 μm und 3 μm zu emittieren. Vorzugsweise weist die elektromagnetische Strahlungsquelle eine oder mehrere LED's oder Laser auf.

Die Mittel zur Erwärmung der Membran sind bevorzugt ein Stubstratwerkstoff der Membran oder eine Membranbeschichtung mit einer oder mehreren Absorbtionsbanden und eine thermische Strahlungsquelle, die eingerichtet ist, thermische Strahlung im Bereich der Absorbtionsbanden zu emittieren.

Alternativ kann auch das Substrat des Festkörpers, in das die Fluidleitung eingearbeitet ist, beispielsweise das Substrat eines mikrofluidischen Chips, lokal um die Membran herum oder vollständig aus einem absorbierenden Werkstoff gebildet sein, sofern eine Erwärmung der Fluide in dem Substrat unkritisch ist.

Gemäß einer weiteren Alternative kann die Membran mittels Durchleiten von Strom direkt widerstandsbeheizt sein oder es kann im Bereich der Membran eine externe Heizquelle (z.B. indirekte Widerstandsheizung) und eine thermisch leitende Verbindung von dieser zur Membran vorgesehen sein.

Die Aufgabe wird schließlich durch die Verwendung eines fluidischen Systems der vorstehend beschrieben Art als Filter in einem fluidischen, insbesondere mikrofluidischen System, beispielsweise zur Trennung von Flüssigkeitssäulen, Erzeugung und Vereinigung von Tröpfchen in der Tröpfchenfluidik oder dergleichen gelöst.

In einer anderen erfindungsgemäßen Verwendung kommt das fluidische System der vorstehend beschrieben Art als Ventil in einem fluidischen, insbesondere einem mikrofluidischen System zum Einsatz.

Der Vorteil gegenüber herkömmlichen Ventilen ist, dass das fluidische System der vorstehend genannten Art ohne bewegliche Komponenten auskommt und deshalb weniger verschleißanfällig ist.

Weitere Merkmale und Vorteile der Erfindung werden nachfolgend anhand von Ausführungsbeispielen erläutert. In den Figuren zeigen:

Figuren 1A-B      eine schematische Darstellung zur Erläuterung des "Elektro-Wetting";

Figur 2      ein Diagramm der Abhängigkeit des Kontaktwinkels von einer Potenzialdifferenz;

Figuren 3A-C      eine Modellierung einer Membranpore zur Beschreibung der Position der Grenzfläche in Abhängigkeit von dem Druck in den Medien;

Figur 4      ein Diagramm des Druckverlaufs beim Durchtritt der Grenzfläche durch eine Membranpore für verschiedene Kontaktwinkel;

Figur 5      eine schematische Darstellung des Verfahrens zum Betreiben des fluidischen Systems in einer Sequenz von 7 aufeinanderfolgenden Momentaufnahmen;

Figur 6A-B      eine Druck- und Volumenstromverlaufskurve zu der Sequenz gemäß Figur 5;

Figur 7A-C    das fluidische System in schematischer Darstellung;

Figur 8A-G    ein Anwendungsbeispiel für das fluidische Systems als Ventil in einer Sequenz verschiedener Schaltzustände.

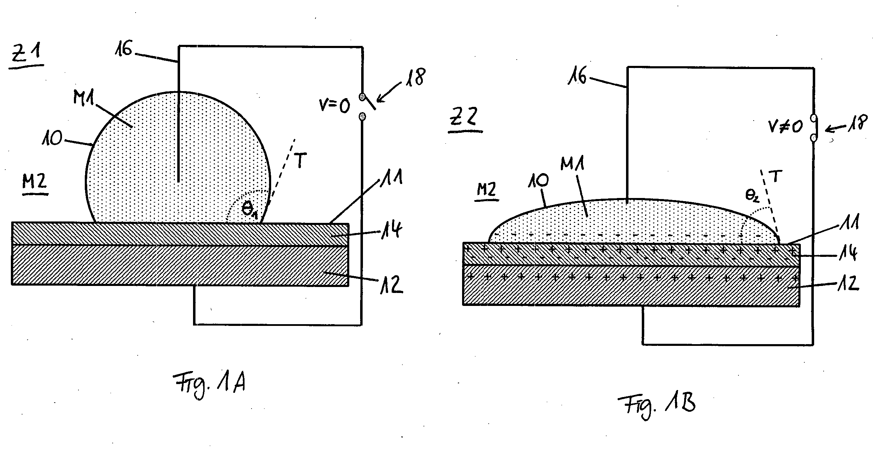

Anhand der Figuren 1A und 1B wird das Benetzungsverhalten zwischen einem ersten Medium M1, beispielsweise eines Flüssigkeitstropfens, und einem zweiten Medium M2, zum Beispiel eines den Flüssigkeitstropfen umgebenden Gases, und einer zu benetzenden Oberfläche 11 eines Körpers beschrieben. Zur Änderung des Benetzungsverhaltens wird von dem Phänomen des Elektrobenetzens Gebrauch gemacht. Die zu benetzende Oberfläche 11 des Körpers weist zu diesem Zweck ein elektrisch leitendes Substrat 12 auf, das eine erste Elektrode bildet, auf die eine Schicht eines Dielektrikums 14 aufgebracht ist. Eine zweite Elektrode 16 ist unmittelbar in das erste Medium M1 eingetaucht. Die Elektroden 12 und 16 sind mit einer Spannungsquelle 18 verbunden.

Figur 1A zeigt einen Zustand $Z_1$, in dem die Oberfläche 10 von dem ersten Medium M1 weniger benetzt wird, sodass sich ein erster Kontaktwinkel $\Theta_1 > 90°$ ausbildet. Zwischen den Elektroden 12 und 16 liegt keine Spannung an. In dem Zustand $Z_1$ beträgt das elektrische Feld deshalb $E_1 = 0$ V/m.

Die Figur 1B beschreibt einen Zustand $Z_2$, in dem eine Spannung zwischen den beiden Elektroden 12 und 16 angelegt wird. Dies bewirkt eine Ladungsverschiebung innerhalb des die Oberfläche 11 bereitstellenden Dielektrikums 14, sodass sich beispielsweise die Oberflächenenergie des Dielektrikums 14 gegenüber dem Zustand $Z_1$ verändert. Die Oberfläche 11 benetzt in Folge dessen im Zustand $Z_2$ stärker mit dem Medium M1, oder anders gesagt, der Kontaktwinkel $\Theta_2$ zwischen der Grenzfläche 10 und der Oberfläche 11 verkleinert sich gegen über dem Kontaktwinkel $\Theta_1$ im Ausgangszustand $Z_1$. Im gezeigten Fall gilt sogar $\Theta_2 < 90°$.

Der Kontaktwinkel $\Theta_1$ und $\Theta_2$ ist im Sinne dieser Schrift stets auf das erste Medium bezogen, er wird also immer zwischen der Oberfläche 11 und der Grenzfläche 10 innerhalb des Mediums M1 aufgetragen.

Wie bereits an anderer Stelle erwähnt, kommt es grundsätzlich nicht darauf an, dass die Medien unmittelbar kontaktiert werden, wie in Figur 1 illustriert. Jedes elektrische Feld im Bereich des Kontaktes zwischen den Medien und der Oberfläche der Membran sorgt im Fall des Elektrobenetzens für eine Ladungsverschiebung und damit für eine Manipulation des Kontaktwinkels. Allerdings ist die direkte Kontaktierung sehr effizient, weil sich das Feld sehr lokal über dem Dielektrikum aufbaut, dessen Molekularstruktur für die Änderung des Kontaktwinkels verantwortlich ist.

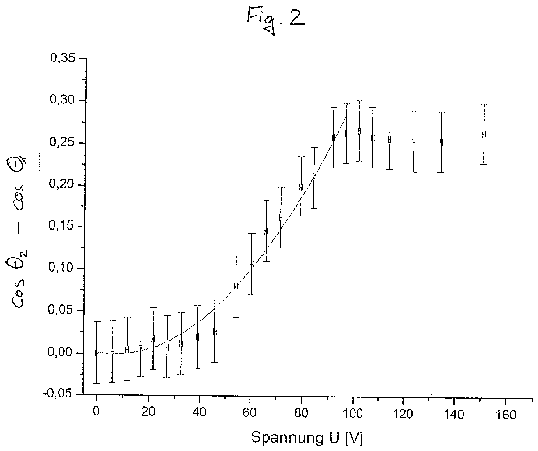

In Figur 2 ist das Verhalten des Kontaktwinkels $\Theta$, genauer die Differenz ($\cos \Theta_2 - \cos \Theta_1$) gegenüber der zwischen den Elektroden 12 und 16 anliegenden Spannung aufgetragen. In dem konkreten Beispiel wird ein Substrat mit einer elektrisch leitenden Beschichtung aus Chrom und Gold und einer darauf aufgebrachten dielektrischen Beschichtung aus Parylene C mit einer Dicke von $7,5 \pm 1$ $\mu m$ untersucht. Es zeigt sich, dass der Kontaktwinkel von $\Theta_1 = 89°$ im Zustand $Z_1$ bis zu $\Theta_2 = 74°$ im Zustand $Z_2$ variiert. Dabei erreicht er bei einer Spannung von ca. 100 V über das 7,5 $\mu m$ dicke Dielektrikum eine Sättigung. Eine weitere Spannungserhöhung verkleinert den Kontaktwinkel nicht mehr wesentlich. Hieraus resultiert eine maximale Differenz ($\cos \Theta_2 - \cos \Theta_1$) von 0,26.

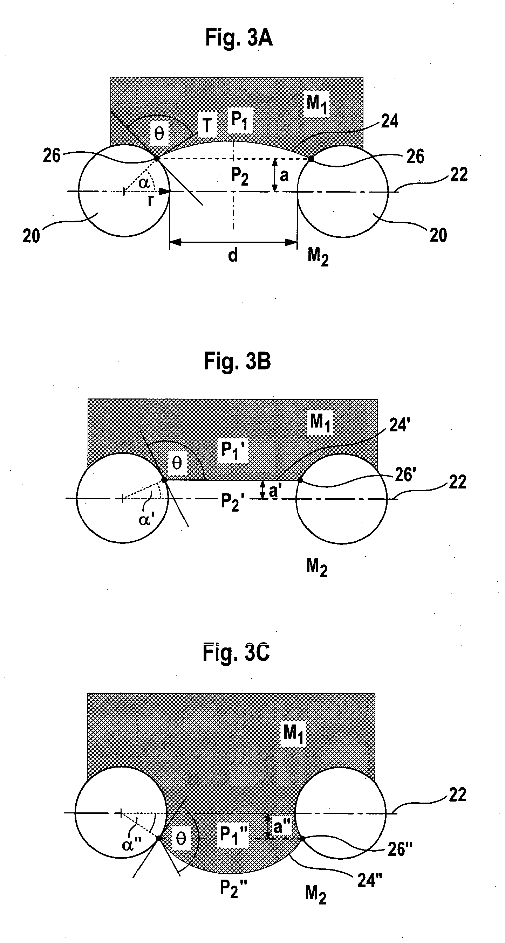

Anhand der Figuren 3A bis 3C wird die Veränderung der Position der Grenzfläche in Abhängigkeit der Druckverhältnisse ohne Manipulation des Kontaktwinkels erläutert. Als vereinfachende Annahme ist hier eine Pore mit einem minimalen Durchmesser d zwischen zwei im Schnitt kreisförmigen Elementen 20 eine Membran gezeigt. Die kreisförmigen Elemente repräsentieren beispielsweise Schnitte durch Drähte einer Membran in Form eines Drahtgewebes oder dergleichen. Die beiden Elemente definieren eine Membranebene 22.

Jeweils im Wesentlichen oberhalb der Membranebene 22 befindet sich ein Medium M1. Unterhalb der Ebene 22 befindet sich ein Medium M2. Zwischen den beiden Medien ist die Grenzfläche 24 ausgebildet. In dem Medium M1 herrscht ein Druck $P_1$. In dem Medium M2 herrscht ein Druck $P_2$. Im Zustand der Figur 3A gilt $P_1 < P_2$. Hierdurch bedingt wölbt sich die Grenzfläche 24 konkav in das Medium M1 hinein.

Oberhalb der Mittelebene 22 befinden sich in einem Abstand a Kontaktpunkte 26 der Grenzfläche 24 mit der Oberfläche der Membranelemente 20. Äquivalent zu dem Abstand a ist ein Winkel $\alpha$ zwischen der Membranebene 22 und der Verbindungslinie zwischen dem Mittelpunkt des kreisförmigen Elements 20 und dem Kontaktpunkt 26. Der Abstand a und der Winkel $\alpha$ haben bei dem Druckverhältnis $P_1 < P_2$ ein negatives Vorzeichen.

Der Kontaktwinkel $\Theta$ ergibt sich als Zwischenwinkel zwischen der Tangente an die Oberfläche des Membranelements 20 und der Tangente T an die Grenzfläche 24 in dem Kontaktpunkt 26 und wird wie vorstehend definiert innerhalb des Mediums M1 aufgetragen.

In Figur 3B ist ein Zustand mit einem anderen Druckverhältnis gezeigt. Hier gilt $P_1 = P_2$, sodass die Grenzfläche 24' eben und parallel zu der Membranebene 22 verläuft. Die Grenzfläche 24 verläuft noch immer oberhalb der Membranebene 22 und hat deshalb weiterhin einen negativen Abstand a', der allerdings dem Betrag nach kleiner ist als a. Dies liegt daran, dass die Benetzbarkeit der Medien M1 und M2 unterschiedlichen ist, oder anders gesagt, dass der Kontaktwinkel $\Theta$ größer als 90° ist. Der Kontaktwinkel $\Theta$ hat sich indes nicht zwischen dem Zustand gemäß Figur 3A und dem Zustand gemäß Figur 3B geändert.

In Figur 3C ist schließlich ein Zustand dargestellt, in dem der Druck $P_1''$ im ersten Medium M1 größer ist, als der Druck $P_2''$ im Medium M2. Hieraus resultiert eine Grenzfläche 24'' mit konvexer Krümmung aus dem Medium M1 heraus. Der Kontaktpunkt 26" der Grenzfläche 24" mit der Oberfläche der Membranelemente 20 weist nun erstmals einen positiven Abstand a" zur Membranebene 22 auf, was einem Winkel $\alpha$" mit ebenfalls positivem Vorzeichen entspricht. Weiterhin wird von einem unveränderten Kontaktwinkel $\Theta$ ausgegangen.

Der Druckverlauf, genauer der Verlauf der Druckdifferenz $P_1 - P_2 = \Delta P$ kann in diesem Model als Funktion des Winkels Alpha wie folgt beschrieben werden:

$$\Delta p(\alpha) = -\frac{2\gamma}{0{,}5d} \frac{\cos(\Theta - \alpha)}{r(1 - \cos \alpha)}$$

Hierin stehen $\Delta P$ für die Druckdifferenz $P_1 - P_2$, $\alpha$ für den Winkel zur Parametrisierung der Position der Grenzfläche relativ zur Membranebene, $\gamma$ für die Oberflächen- oder Grenzflächenspannung, $\Theta$ für den Kontaktwinkel, d für den minimalen Porendurchmesser und r für den Krümmungsradius der simulierten Membranelemente.

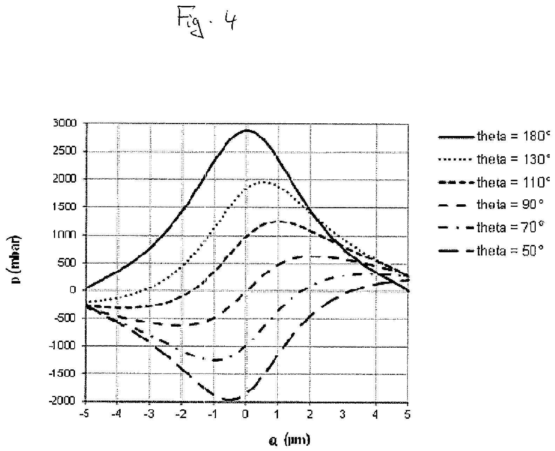

In Figur 4 ist jene Druckdifferenz $\Delta P$ gegenüber dem Parameter a aufgetragen und zwar für verschiedene Kontaktwinkel $\Theta$ zwischen 180° und 50°. Es zeigt sich, dass bei einem Kontaktwinkel $\Theta = 180°$, was einer vollständigen Unbenetzbarkeit der Membranoberfläche mit dem Medium M1 entspräche, eine maximale Druckdifferenz einstellen würde, wenn die Kontaktpunkte 26 in der Membranebene 22 lägen. Mit zunehmender Benetzbarkeit und damit mit abnehmendem Kontaktwinkel $\Theta$ nimmt die maximale Druckdifferenz ab. Zugleich wandert das Maximum hin zu einem positiven Wert von a. Ferner ist zu beobachten, dass sich bei kleinem a sogar eine negative Druckdifferenz einstellt, d. h., dass die Grenzflächenspannung bzw. Oberflächenenergien dafür sorgt, dass das Medium M1 ein Stück weit in die Porenöffnung hineingezogen wird. Diese Erkenntnis wird zum Verständnis der nun folgenden Prozessbeschreibung beitragen.

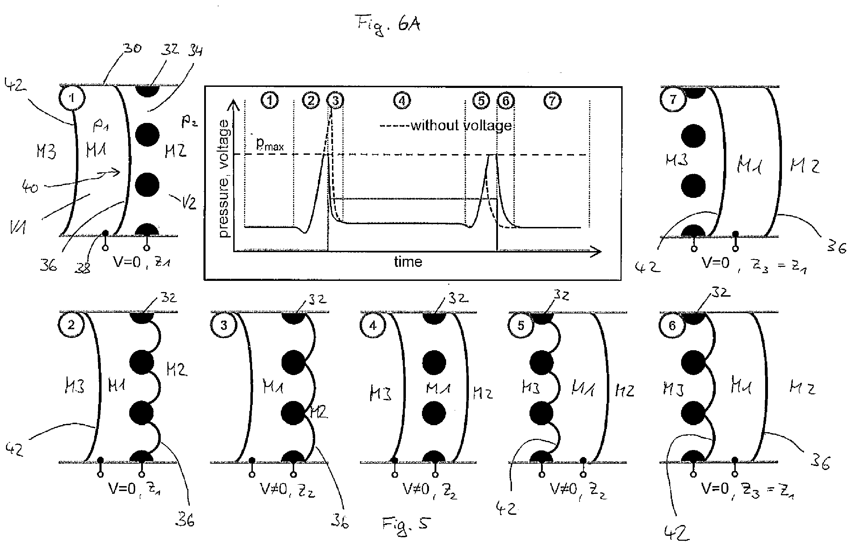

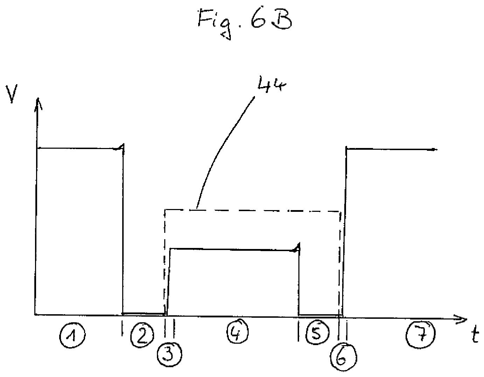

Anhand der Figuren 5 und 6 werden Ausführungsbeispiele des erfindungsgemäßen fluidischen Systems sowie des erfindungsgemäßen Verfahrens zum Betreiben desselben erläutert. Figur 5 zeigt eine Sequenz von 7 aufeinanderfolgenden Momentaufnahmen des fluidischen Systems in schematisch stark vereinfachter Form. In allen Momentaufnahmen ist derselbe Ausschnitt gezeigt. Dieses weist im Wesentlichen eine von einer Oberfläche 30 eines Substrats begrenzte Fluidleitung und eine die Fluidleitung in ein erstes Volumen V1 und ein zweites Volumen V2 geometrisch trennende Membran 32 auf. Die Membran 32 wird durch kreisförmige Membranelemente repräsentiert, zwischen denen offene Poren 34 ausgebildet sind.

In der Fluidleitung befindet sich links der Membran 32 ein erstes Medium M1 und im Wesentlichen rechts der Membran 32 ein zweites Medium M2. Zwischen den beiden Medien M1 und M2 ist eine Grenzfläche 36 ausgebildet. Weiterhin befindet sich links des ersten Mediums M1 ein drittes Medium M3, zwischen dem und dem ersten Medium M1 eine zweite Grenzfläche 42 ausgebildet ist. Das erste Medium M1 weist also zwischen den Grenzflächen 36 und 42 ein begrenztes Volumen auf.

Das fluidische System weist weiterhin eine erste Elektrode in Form eines leitenden Substrats der Membran 32 oder eine leitende Beschichtung der Membran 32 (jeweils nicht dargestellt) und andererseits eine zweite unmittelbar benachbart zu der Membran 32 angeordnete Elektrode 38 auf. Die erste und die zweite Elektrode sind mit einer Spannungsquelle verbunden. Zwischen den beiden Elektroden ist in der Momentaufnahme "1" keine Spannung angelegt, was einen ersten Zustand $Z_1$ im Wesentlichen beschreibt. Der Zustand $Z_1$ ist darüber hinaus naturgemäß durch eine erste elektromagnetische Einstrahlung $S_1$ und eine erste Temperatur $T_1$ definiert, Letztere Parameter spielen jedoch in dem vorliegenden Ausführungsbeispiel keine Rolle, weil sie nicht variiert werden, und sind deshalb hier nicht angegeben. In der Momentaufnahme "1" liegt ferner ein Druck $P_1$ in dem ersten Medium M1 und ein Druck $P_2$ in dem zweiten Medium M2 an. Die Druckdifferenz $\Delta P = P_1 - P_2$ ist der Antrieb zur Bewegung der Medien M1 und M2 und der Grenzfläche 36 in Richtung des Pfeils 40 auf die Membran 32 zu.

In dem Diagramm der Figur 6A ist der Verlauf der Druckdifferenz $\Delta P$ über der Zeit aufgetragen. Die Momentaufnahme "1" befindet sich in dem mit "1" markierten Abschnitt des Diagramms. Die Druckdifferenz $\Delta P$ ist hier konstant auf niedrigem Niveau, weil dem Vortrieb der Grenzfläche 36 in Richtung der Membran kein wesentlicher Widerstand entgegengesetzt wird.

Dies ändert sich bei Erreichen der Membran 32, was in der Momentaufnahme "2" dargestellt ist. Noch immer befindet sich das System in dem Zustand $Z_1$ ohne Potenzialdifferenz zwischen den beiden Elektroden. Das System ist so konfiguriert, dass die Porenoberfläche der Membran 32 von dem ersten Medium nicht oder weniger benetzt und von dem zweiten Medium M2 stärker benetzt wird.

Weiterhin ist das System aber bestrebt den Volumenstrom durch die Fluidleitung konstant zu halten, wodurch der Druck bereits kurz nach der Berührung der Grenzfläche 36 mit der Membran 32 stark ansteigt. Hieraus resultiert in der Momentaufnahme "2" eine starke konvexe Wölbung der Grenzfläche 36 zwischen den Membranelementen, ähnlich der Figur 3C, an der auch der Kontaktwinkel $\Theta_1 > 90°$ abzulesen ist.

Korrespondierend mit der Momentaufnahme "2" ist in dem Diagramm der Figur 6A in Abschnitt "2" zu erkennen, dass die Druckdifferenz bis zu einem Maximum $P_{max}$ ansteigt. Bei genauer Betrachtung der Druckkurve sieht man, dass in dem Moment, in dem die vordere Grenzfläche 36 die Membran erreicht, die intiale Benetzung der Membran zu einer durch die Grenzflächenspannung bedingten beschleunigten Bewegung des Mediums M 2 in Richtung der Membran und infolgedessen zu einem leichten Druckabfall führt, weil sich die Medien schneller bewegen, als es der Volumenförderung des Systems entspricht. Dies gilt zumindest für alle (realen) Kontaktwinkel < 180°. Erst anschließend steigt der Druck bis auf $P_{max}$ an. Dann ist das erste Medium bis zu einer maximalen Tiefe in die Poren eingedrungen, bei der die Grenzflächen 36 benachbarter Poren aber nicht in Kontakt kommen, sodass die Grenzfläche der Flüssigkeit nicht durch die Membran dringen kann.

Der sogenannte maximale Förderdruck $P_{max}$ ist systemisch bedingt und wird durch die Dimensionierung der Förderpumpe oder durch Mittel zur Druckbegrenzung eingestellt. Offenkundig bricht die Grenzfläche 36 bei dem maximalen Förderdruck noch nicht durch die Poren der Membran durch, weil die Grenzflächenspannung noch größeren Drücken standhält. Der sogenannte Durchbruchsdruck liegt im Zustand $Z_1$ also wesentlich höher. Er korrespondiert mit dem ersten Kontaktwinkel $\Theta_1$ näherungsweise wie es im Diagramm der Figur 4 illustriert ist. Nimmt man beispielsweise an, dass der Kontaktwinkel $\Theta_1$ im Zustand $Z_1$ 130° beträgt, so korrespondiert dies bei der dort angenommenen Porengeometrie und Grenzflächenspannung mit einem Durchbruchsdruck von 2.000 mbar.

Wird das System in den Zustand $Z_2$ geändert, verändert dies wenigstens eine der Oberflächenenergie der Porenoberfläche der Membran 32, sodass sich ein zweiter Kontaktwinkel $\Theta_2 < \Theta_1$ zwischen der Porenoberfläche und der Grenzfläche 36 einstellt. In dem Ausführungsbeispiel gemäß Figur 5 unterscheidet sich der Zustand $Z_2$ von dem Zustand $Z_1$ durch ein elektrisches Feld $E_2 \neq E_1$ bzw. durch eine Potenzialdifferenz $V \neq 0$. Der Moment nach dem Umschalten ist in der Momentaufnahme "3" dargestellt. Die Porenoberfläche wird nun stärker mit dem Medium M1 benetzt und die Wölbung der Grenzfläche 36 reduziert sich.

In dem Druck-Zeit-Diagramm gemäß Figur 6A ist das Verhalten in dem Abschnitt "3" gezeigt. Die Druckdifferenz beginnt unmittelbar nach Einschalten des elektrischen Feldes - die Spannungskurve ist als Rechteck unterhalb der Druckkurve zu sehen - zu fallen. Der Grund hierfür ist, dass nach dem Einstellen des Zustands $Z_2$ sich ein veränderter Kontaktwinkel $\Theta_2$ einstellt, der mit einem Durchbruchsdruck $P_{dlo}$ korrespondiert, bei dem die Grenzfläche durch die Membran durchtritt, wobei der Durchbruchsdruck $P_{dlo}$ nun kleiner ist als der maximale Förderdruck $P_{max}$.

Unter diesen Bedingungen kann das erste Medium M1 tiefer in die Poren 34 eindringen bis sich die Flüssigkeitsoberflächen aus benachbarten Poren vereinen und eine gemeinsame neue vordere Grenzfläche ausbilden. Die Membran ist vollständig von dem Medium M1 benetzt und umspült. Die Medien werden also weitergefördert, was in der Momentaufnahme "4" dargestellt ist. Die Druckdifferenz ist bis auf einen während des Abschnittes "4" konstanten Wert abgefallen, der geringfügig höher ist als die Druckdifferenz zum Zeitpunkt der Momentaufnahme "1". Dies ist dem Umstand geschuldet, dass die Membran 32 dem Medium M1 in diesem Beispiel einen größeren Strömungswiderstand entgegensetzt, als dem Medium M2. Mithin hat in diesem Ausführungsbeispiel das M1 eine höhere Viskosität als das Medium M2.

Die Momentaufnahme "5" zeigt das Verhalten des fluidischen Systems, welches sich weiterhin im Zustand $Z_2$ befindet, in dem Moment, in dem die zweite Grenzfläche 42 die Membran 32 berührt, woraufhin das Fördern der Medien M2, M1 und M3 durch die Poren der Membran erneut stoppt. Das Stoppen wird in dem korrespondierenden Abschnitt "5" des Diagramms gemäß Figur 6 durch einen Druckanstieg bis hin zum maximalen Förderdruck $P_{max}$ quittiert. Ursache hierfür ist, dass der zwischen der Grenzfläche 42 und der Porenoberfläche ausgebildete dritte Kontaktwinkel $\Theta_3$ mit einem Durchbruchsdruck $P_{dhi}$ korrespondiert, der ebenfalls größer ist, als der maximale Förderdruck $P_{max}$. Analog wie in Abschnitt "2" gilt auch in Abschnitt "5", dass bei Erreichen der Membran die initiale Benetzung mit dem Medium M3 für alle Kontaktwinkel > 0° zunächst zu einem Druckabfall führt, wie die Kurve des Diagramms gemäß Figur 6A erkennen lassen.

Der Durchbruchsdruck $P_{dhi}$ für die Grenzfläche 42 ist in der Regel nicht gleich dem Durchbruchsdruck für die Grenzfläche 36. Gleich sind diese nur, wenn gilt: $\Theta_3 = 180 - \Theta_1$. Offenkundig benetzt das Medium M1 also die Porenoberfläche der Membran 32 stärker als das Medium M3, was mit einem dritten Kontaktwinkel $\Theta_3 < 90°$ einhergeht. Aus der Perspektive des Mediums M3, stellt sich die Situation an der Grenzfläche zum Medium M1 ähnlich dar, wie in der Momentaufnahme "2" aus Sicht des Mediums M1 an der Grenzfläche zum Medium M2.

Damit sich auch die hintere Grenzfläche 42 von der Membran 32 lösen kann, wird das fluidische System in einen Zustand $Z_3$ mit einem elektrischen Feld $E_3 \neq E_2$ umgeschaltet, was in der Momentaufnahme "6" dargestellt ist. Dies führt erneut zu einem sofortigen Druckabfall, weil sich durch Veränderung wenigstens einer der Oberflächenenergien der Porenoberfläche der Membran 32 und/oder der Medien ein vierter Kontaktwinkel $\Theta_4 > \Theta_3$ zwischen der Porenoberfläche und der Grenzfläche 42 einstellt, der mit einem Durchbruchsdruck $P_{dlo}$ korrespondiert, welcher kleiner ist als der maximale Förderdruck $P_{max}$. Danach können die Medien M3, M1 und M2 unter Aufbringung eines geringeren Förderdrucks weiter in Richtung des Pfeils 40 transportiert werden, vgl. Momentaufnahme "7", wobei der notwendige Förderdruck, von der Viskosität des Mediums M3 abhängig, anders ausfallen kann als in den Momenten "1" oder "4".

Die Figuren 5 und 6 zeigen, dass die Erfindung es ermöglicht, das Medium M1 in kontrollierter Form durch die Membran 32 zu transportieren, indem eine Umschaltung der Zustände, hier des elektrischen Feldes bzw. der zwischen den Elektroden 38 und der Membran 32 angelegten Spannung, vorgenommen wird. In einem typischen Anwendungsfall handelt es sich bei dem Medium M1 um einen Tropfen einer Flüssigkeit, während die Medien M2 und M3 Gase, vorzugsweise dasselbe Gas, sind. Dementsprechend ist es sinnvoll, die Zustände in $Z_3$ und $Z_1$ identisch zu wählen.

Vor dem Ein- oder Ausschalten der Spannung bei den Zustandswechseln von $Z_1$ nach $Z_2$ sowie von $Z_2$ nach $Z_3$ kann es aufgrund des sehr schnellen Druckabfalls sinnvoll sein, den Förderdruck zunächst zu reduzieren, um eine schlagartige Bildung der vereinten neuen Grenzflächen 36 bzw. 42 zu verhindern.

Es handelt sich bei dem anhand der Figur 6 geschilderten Ausführungsbeispiel um den Fall der Volumensteuerung, bei dem das System bestrebt ist, das transportierte Volumen konstant zu halten, wobei das Umschalten der Zustände nach Erreichen des maximalen Förderdrucks erfolgt. Alternativ hierzu kann das System aber auch eingerichtet sein, die Zustände zur Entlastung des Systems bereits vorher bei Erreichen eines Schwellendrucks automatisch durchzuführen. Der Förderdruck muss zu diesem Zweck mittels eines Drucksensors überwacht werden und bei Überschreiten des Schwellendrucks in dem ersten Volumen $V_1$ mittels einer Steuerung automatisch den zweiten Zustand einstellen. Der Schwellendruck kann frei gewählt werden, ist aber jedenfalls kleiner als der maximale Förderdruck.

In Figur 6B ist als Alternative ein druckgesteuertes fluidisches System dargestellt. Dieses System ist bestrebt, die Druckdifferenz konstant zu halten. Dies geschieht mittels Überwachung des Volumenstroms V. In dem Abschnitt "1" gemäß Figur 5 ist der Volumenstrom konstant. Erreicht die vordere Grenzfläche 36 zwischen dem Medium M1 und Medium M2 die Porenoberfläche der Membran 32, so führt dies - abgesehen von einer initialen kurzzeitigen Erhöhung des Volumenstroms dann zu einem sehr raschen Abfall desselben, bis hin zum vollständigen Stopp des Transports im Abschnitt 2 des Diagramms, weil der Förderdruck nicht ausreicht die Grenzflächenspannung zu überwinden.

Der konstante Förderdruck $P_c$ ist wiederum systemisch bedingt und wird durch die Dimensionierung der Förderpumpe oder durch Mittel zur Druckbegrenzung eingestellt.

Nach Umschalten des Zustandes von $Z_1$ nach $Z_2$, was durch die gestrichelte Spannungskurve 44 dargestellt wird, steigt der Volumenstrom in dem Abschnitt "3" wieder an, bis ein dem konstanten Förderdruck $P_c$ entsprechender Volumenstrom erreicht ist, der aufgrund eines anderen Strömungswiderstandes des Mediums M1 geringer ausfällt als im Abschnitt "1". Erreicht die hintere Grenzfläche 42 zwischen dem Medium M1 und dem anschließenden Medium M3 die Membran, bricht der Volumenstrom nach einem kurzzeitigen initialen Anstieg erneut zusammen, weil der konstante Förderdruck $P_c$ erneut kleiner ist als der mit dem Kontaktwinkel $\Theta_3$ korrespondierende Durchbruchsdruck $P_{dhi}$. Diese Konfiguration wird im Abschnitt "5" solange beibehalten, bis die Spannung, respektive das elektrische Feld, wieder abgeschaltet und ein Zustand $Z_3$ herbeigeführt wird, in dem sich auch die hintere Grenzfläche 42 von der Membran 32 ablösen kann, vgl. Abschnitt "6" in dem Diagramm der Figur 6B. Der Volumenstrom steigt nun wieder an. Sind die Medien M2 und M3 identisch oder haben sie zumindest die gleiche Viskosität, dann ist der Volumenstrom im Abschnitt "7" gleich dem in Abschnitt "1".

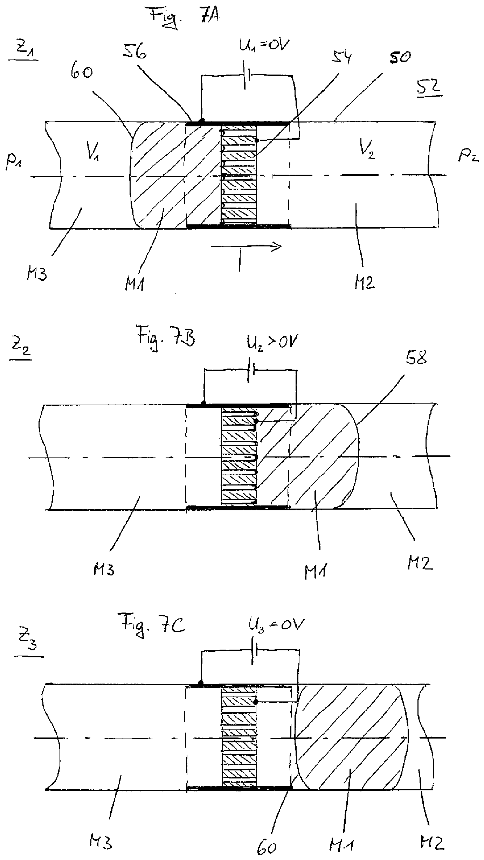

In den Figuren 7A bis 7C ist das fluidische System nochmals schematisch aber etwas detaillierter dargestellt. Die Oberfläche der Fluidleitung 50 ist in einem Substrat beispielsweise eines im wesentlichen ebenen mikrofluidischen Chips 52 wie gezeigt beispielsweise als Kanal in der Ebene des Substrats 52 gebildet. Abweichend hiervon ist es auch möglich, die Membran in einem Abschnitt der Fluidleitung anzuordnen, in dem diese senkrecht zur Substratebene einen Seitenwechsel vollzieht. Vorzugsweise senkrecht zur Leitungsrichtung ist eine Membran 54 eingebracht, welche die Fluidleitung 50 in ein erstes Volumen V1 und ein zweites Volumen V2 geometrisch trennt. Die Membran 54, genauer der hier nicht explizit dargestellte Kern der Membran, oder eine tieferliegende Schicht der Membran 54 ist elektrisch leitfähig und an eine Spannungsquelle angeschlossen. Die Oberfläche der Fluidleitung 50 ist in unmittelbarer Umgebung der Membran 54 mit einer zweiten Elektrode versehen. Diese Elektrode kann die Membran 54 beispielsweise ringförmig umgeben. Sie kann auf die Innenoberfläche der Fluidleitung 50 aufgedampft oder anderweitig als Schicht aufgebracht sein. Voraussetzung dieser zweiten Elektrode 56 ist, dass diese in das erste Volumen V 1 und in das zweite Volumen V 2 hineinragt, um dort einen Kontakt mit den in diesen Volumina befindlichen Medien herstellen zu können. Wird eine Spannungsdifferenz zwischen der ersten Elektrode in der Membran 54 und der zweiten Elektrode 56 angelegt, so bildet sich im Bereich der Membran 54 ein elektrisches Feld aus. Dieses elektrische Feld wird in der vorstehend beschriebenen Weise genutzt, um den Kontaktwinkel zwischen der Porenoberfläche der Membran 54 und einer Grenzfläche 58 zwischen einem ersten Medium M1 und einem zweiten Medium M2 zwischen der Porenoberfläche der Membran 54 bzw. einer zweiten Grenzfläche 60 zwischen dem ersten Medium M1 und einem dritten Medium M3 zu manipulieren.

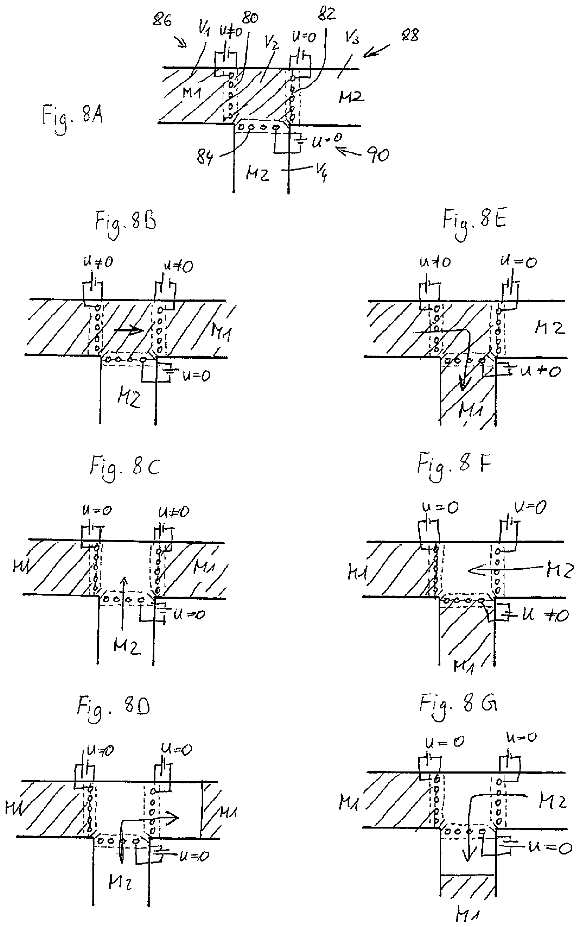

In den Figuren 8A bis 8G ist ein Verwendungsbeispiel des erfindungsgemäßen fluidischen Systems gezeigt, welches hier als Ventil ohne mechanisch bewegliche Komponenten genutzt wird. Das fluidische System weist in diesem Fall vier Volumina V1, V2, V3 und V4 auf. Das zweite Volumen V2 ist von dem ersten Volumen V1 mittels einer ersten Membran 80, von dem dritten Volumen V3 mittels einer zweiten Membran 82 und von dem vierten Volumen V4 mittels einer dritten Membran 84 geometrisch getrennt. Das erste Volumen V1 ist zusammen mit dem zweiten Volumen V2 und der ersten Membran 80 Teil eines ersten fluidischen Systems 86 der vorstehend beschriebenen Art, das zweite Volumen V2 zusammen mit dem dritten Volumen V3 und der zweiten Membran 82 Teil eines zweiten fluidischen Systems 88 und das zweite Volumen V2 zusammen mit dem vierten Volumen V4 und der dritten Membran 84 Teil eines dritten fluidischen Systems 90. Alle drei Membranen sind identisch aufgebaut und weisen daher in jeweils gleichem Zustand gleiche Oberflächenenergien auf.

Das erste fluidische System 86 befindet sich gemäß der Figur 8A in einem Zustand $Z_2$, bei dem eine Potenzialdifferenz U zwischen der ersten und der zweiten Elektrode der ersten Membran 80 angelegt wird; das zweite fluidische System 88 befindet sich in einem Zustand $Z_1$, bei dem keine Potenzialdifferenz U zwischen der ersten und der zweiten Elektrode der zweiten Membran 82 angelegt wird; und das dritte fluidische System 90 befindet sich in einem Zustand $Z_1$, bei dem keine Potenzialdifferenz U zwischen der ersten und der zweiten Elektrode der dritten Membran 84 angelegt wird. Steht in dem ersten Volumen V1 ein erstes Medium M1 unter Druck an, so kann es aufgrund der Benetzbarkeit der ersten Mebran 80 diese passieren und bis zur zweiten und dritten Membran vordringen. In dem dritten Volumen V3 und dem vierten Volumen V4 steht ein zweites Medium M2 an und das jeweils eine Grenzfläche mit dem ersten Medium M1 an der zweiten, dritten Membran 82, 84 ausbildet. Es wird angenommen, dass das Medium M1 die Porenoberfläche der zweiten und dritten Membranen im Zustand $Z_1$ weniger benetzt, als das Medium M2, sodass hier ein Kontaktwinkel $\Theta_1 > 90°$ aus Sicht des Mediums M1 entsteht. Die Förderung der Medien aus dem Volumen V2 in die Volumina V3 und V4 stoppt unter der Bedingung, dass der Förderdruck den Durchbruchsdruck an der Membran 82 nicht übersteigt. Gleiches gilt an der dritten Membran 84.

Dies ändert sich gemäß Figur 8B, wenn das System durch Änderung der Potenzialdifferenz an der zweiten Membran 82 in einen Zustand $Z_2$ umgeschaltet wird. Hieraufhin benetzt das Medium M1 die Porenoberfläche der Membran 80 in der zuvor beschriebenen Weise und kann durch die Poren der Membran hindurch in das Volumen V3 ohne Erhöhung des Förderdrucks gefördert werden. Es wird in dem Zustand gemäß Figur 8B davon ausgegangen, dass sich die Verhältnisse an der dritten Membran 84 indes nicht geändert haben, sodass diesbezüglich weiterhin kein Transport des Mediums M1 in das Volumen V4 stattfinden kann.

In Figur 8C wird die Spannung im Bereich der ersten Membran 80 wieder zurückgesetzt, sodass der Transport des Mediums M1 durch die erste Membran 80 stoppt. Gleichzeitig wird der bereits durch die Membran 80 transportierte Anteil des Mediums M1 mit Hilfe des Mediums M2 aus dem vierten Volumen V4 weiter in das Volumen V3 gefördert. Der Vorgang stoppt, wenn die Grenzfläche zwischen dem ersten und dem zweiten Medium die zweite Membran 84 erreicht. Durch Zurückschalten des Systems 88 an der zweiten Membran 82 in den Zustand $Z_1$, vgl. Figur 8D, kann das erste Medium M1 in dem dritten Volumen V3 weiter gefördert werden, bis beispielsweise der Ausgangszustand wieder hergestellt ist, wie er in Figur 8A dargestellt ist. Gemäß Figuren 8E bis 8G wiederholt sich die Umschaltschaltsequenz in zwischen den Zuständen $Z_1$ und $Z_2$ mit umgekehrter Polarität an den zweiten und dritten Membranen 82 und 84, sodass ein begrenztes Volumen des Mediums M1 nun durch das Volumen V4 abtransportiert wird.

Auf diese konstruktiv einfache Weise kann ein fluidisches System zur Trennung von Flüssigkeitssäulen ohne mechanische Ventile geschaffen werden. Das Betreiben eines solchen Ventils durch Spannungsbeaufschlagung ist konstruktiv wesentlich einfacher, als mechanische Ventile, welche mechanische Aktuatoren erfordern. Auch ist es weniger fehler- und verschleißanfällig.

Eine andere Anwendungsform des erfindungsgemäßen fluidischen Systems ist die Nutzung als schaltbare Filter zum Trennen zweier nicht ineinander lösbarer und mischbarer Medien.

**Bezugszeichenliste**

| | |
|---|---|
| 10 | Grenzfläche |
| 11 | Substratoberfläche |
| 12 | Substratelektrode/1. Elektrode |
| 14 | Dielektrische Schicht |
| 16 | zweite Elektrode |
| 18 | Spannungsversorgung |
| 20 | Membranelement |
| 22 | Membranebene |
| 24, 24', 24" | Grenzfläche |
| 26, 26', 26" | Kontaktpunkt |
| 30 | Fluidleitung |
| 32 | Membran |
| 34 | Membranpore |
| 36 | erste Grenzfläche |
| 38 | zweite Elektrode |
| 40 | Transportrichtung |
| 42 | zweite Grenzfläche |
| 44 | Spannungssignal |
| 50 | Fluidleitung |
| 52 | Substrat eines mikrofluidischen Chips |
| 54 | Membran |
| 56 | zweite Elektrode |
| 58 | erste Grenzfläche |
| 60 | zweite Grenzfläche |
| 80 | erste Membran |
| 82 | zweite Membran |
| 84 | dritte Membran |
| 86 | erstes fluidisches System |
| 88 | zweites fluidisches System |
| 90 | drittes fluidisches System |

M1    erstes Medium
M2    zweites Medium
M3    drittes Medium

V1    erstes Volumen
V2    zweites Volumen
V3    drittes Volumen
V4    viertes Volumen
$Z_1$    erster Zustand
$Z_2$    zweiter Zustand
$Z_3$    dritter Zustand

$\Theta_1, \Theta_2, \Theta_3$    Kontaktwinkel
$P_1, P_1', P_1''$    Druck im ersten Medium
$P_2, P_2', P_2''$    Druck im zweiten Medium
a, a', a''    Abstand der Kontaktpunkte von der Membranebene
$\alpha, \alpha', \alpha''$    Winkel der Kontaktpunkte zur Membranebene
r    Radius des Membranelements
d    minimaler Porendurchmesser
$P_{max}$    maximaler Förderdruck

**Patentansprüche**

1. Fluidisches System mit einem Substrat, in das eine Fluidleitung eingearbeitet ist, einem ersten Medium und einem zweiten Medium in der Fluidleitung und einer die Fluidleitung in ein erstes Volumen und ein zweites Volumen geometrisch trennenden Membran, die eine offenporige Mikrostruktur mit einer Porenoberfläche für den Durchtritt eines ersten Mediums und eines zweiten Mediums bereitstellt, zwischen denen eine Grenzfläche ausgebildet ist, wobei zwischen der Grenzfläche und der Porenoberfläche ein Kontaktwinkel besteht,
mit Elektroden zum Anlegen eines elektrischen Feldes im Bereich der Membran,
wobei die Membran in einem ersten Zustand $Z_1$ mit einem ersten elektrischen Feld $E_1$ eine von dem ersten Medium nicht oder weniger benetzende und von dem zweiten Medium stärker benetzende Porenoberfläche aufweist, so dass sich zwischen der Porenoberfläche und der Grenzfläche im ersten Medium ein erster Kontaktwinkel $\Theta_1 > 90°$ ausbildet, und wobei das erste Medium und das zweite Medium und die Porenoberfläche eine Oberflächenenergie aufweisen, von denen mindestens eine Oberflächenenergie in Abhängigkeit von dem elektrischen Feld derart reversibel veränderbar ist, dass sich in einem zweiten Zustand $Z_2$ mit einem zweiten elektrischen Feld $E_2 \neq E_1$ zwischen der Porenoberfläche und der Grenzfläche ein zweiter Kontaktwinkel $\Theta_2 < \Theta_1$ einstellt,
wobei eine erste der Elektroden durch ein leitendes Substrat der Membran oder eine leitende Beschichtung der Membran gebildet wird,
und wobei in dem ersten und dem zweiten Volumen jeweils unmittelbar benachbart zu der Membran eine zweite Elektrode angeordnet ist.

2. Fluidisches System nach Anspruch 1, **dadurch gekennzeichnet, dass** die Porenoberfläche in dem ersten Zustand hydrophob ist, das erste Medium eine wasserbasierte Flüssigkeit ist und dass das zweite Medium ein Gas, insbesondere Luft, oder eine ölbasierte Flüssigkeit ist.

3. Fluidisches System nach Anspruch 1, **dadurch gekennzeichnet, dass** die Porenoberfläche in dem ersten Zustand lipophob ist, das erste Medium eine ölbasierte Flüssigkeit ist und dass das zweite Medium ein Gas, insbesondere Luft, oder eine wasserbasierte Flüssigkeit ist.

4. Fluidisches System nach einem der vorstehenden Ansprüche, **gekennzeichnet durch** eine Pumpe zur Förderung der Medien von dem ersten Volumen durch die Membran in das zweite Volumen, wobei die Pumpe eingerichtet ist, bis zu einem maximalen Förderdruck $P_{max}$ einen konstanten Volumenstrom $V_c$ zu fördern, und durch einen Drucksensor, der angeordnet und eingerichtet ist, eine Druckänderung in dem ersten oder zweiten Volumen zu detektieren und ein Druckänderungssignal auszugeben.

5. Fluidisches System nach einem der Ansprüche 1 bis 3, **gekennzeichnet durch** eine Pumpe zur Förderung der Medien von dem ersten Volumen durch die Membran in das zweite Volumen, wobei die Pumpe eingerichtet ist, mit einem konstanten Förderdruck $P_c$ zu fördern, und durch einen Volumenstromsensor, der angeordnet und eingerichtet ist, eine Volumenstromänderung in dem zweiten Volumen zu detektieren und ein Volumenstromänderungssignal auszugeben.

6. Verfahren zum Betreiben eines fluidischen Systems mit einem Substrat, in das eine Fluidleitung eingearbeitet ist, einem ersten Medium und einem zweiten Medium und einer die Fluidleitung in ein erstes Volumen und ein zweites Volumen geometrisch trennenden Membran, die eine offenporige Mikrostruktur mit einer Porenoberfläche bereitstellt, mit den Schritten:

    - Einstellen eines ersten Zustands $Z_1$ mit einem ersten elektrischen Feld $E_1$ im Bereich der Membran mittels einer ersten Elektrode, die durch ein leitendes Substrat der Membran oder eine leitende Beschichtung der Membran gebildet wird, und mittels einer in dem ersten und dem zweiten Volumen jeweils unmittelbar benachbart zu der Membran angeordneten zweiten Elektode, in dem die Porenoberfläche, ein erstes Medium und ein zweites Medium Oberflächenenergien aufweisen und in dem die Membran eine von dem ersten Medium nicht oder weniger benetzende und von dem zweiten Medium stärker benetzende Porenoberfläche aufweist,

- Fördern des ersten Mediums und des zweiten Mediums, zwischen denen eine Grenzfläche ausgebildet ist, von dem ersten Volumen durch die Membran in das zweite Volumen bis die Grenzfläche die Membran berührt, wobei sich zwischen der Porenoberfläche und der Grenzfläche im ersten Medium ein erster Kontaktwinkel $\Theta_1 > 90°$ einstellt und die Förderung stoppt, während das erste Medium im Wesentlichen noch in dem ersten Volumen und das zweite Medium im Wesentlichen schon im zweiten Volumen verweilen,

- Einstellen eines zweiten Zustand $Z_2$ mit einem zweiten elektrischen Feld $E_2 \neq E_1$ im Bereich der Membran mittels der ersten und der zweiten Elektroden, in dem sich mindestens eine Oberflächenenergie derart reversibel verändert, dass sich ein zweiter Kontaktwinkel $\Theta_2 < \Theta_1$ zwischen der Porenoberfläche und der Grenzfläche einstellt,

- Weiterfördern des ersten und des zweiten Mediums bis auch das erste Medium im Wesentlichen durch die Membran in das zweite Volumen überführt ist, wobei

- das erste Medium ein begrenztes Volumen aufweist und in Bezug auf die Förderrichtung an dessen Ende eine zweite Grenzfläche zu einem dritten Medium ausgebildet ist, wobei das Weiterfördern des ersten Mediums durch die Membran in das zweite Volumen stoppt, wenn die zweite Grenzfläche die Membran berührt und zwischen der zweiten Grenzfläche und der Porenoberfläche ein dritter Kontaktwinkel $\Theta_3$ entsteht.

**7.** Verfahren nach Anspruch 6, **dadurch gekennzeichnet, dass** das Fördern bis zu einem maximalen Förderdruck $P_{max}$ mit einem konstanten Volumenstrom $V_c$ erfolgt und dass eine Druckänderung in dem ersten oder zweiten Volumen detektiert und ein Druckänderungssignal ausgegeben wird.

**8.** Verfahren nach Anspruch 7, **dadurch gekennzeichnet, dass** der erste Kontaktwinkel $\Theta_1$ mit einem Durchbruchsdruck $P_{dhi}$ korrespondiert, bei dem die Grenzfläche durch die Membran durchtritt und der größer ist als der maximale Förderdruck $P_{max}$ und dass der zweite Kontaktwinkel $\Theta_2$ mit einem Durchbruchsdruck $P_{dlo}$ korrespondiert, bei dem die Grenzfläche durch die Membran durchtritt und der kleiner ist als der maximale Förderdruck $P_{max}$.

**9.** Verfahren nach Anspruch 6, **dadurch gekennzeichnet, dass** das Fördern mit einem konstanten Förderdruck $P_c$ erfolgt und dass eine Volumenstromänderung in dem zweiten Volumen detektiert und ein Volumenstromänderungssignals ausgegeben wird.

**10.** Verfahren nach Anspruch 9, **dadurch gekennzeichnet, dass** der erste Kontaktwinkel $\Theta_1$ mit einem Durchbruchsdruck $P_{dhi}$ korrespondiert, bei dem die Grenzfläche durch die Membran durchtritt und der größer ist als der konstante Förderdruck $P_c$ und dass der zweite Kontaktwinkel $\Theta_2$ mit einem Durchbruchsdruck $P_{dlo}$ korrespondiert, bei dem die Grenzfläche durch die Membran durchtritt und der kleiner ist als der konstante Förderdruck $P_c$.

**11.** Verfahren nach einem der Ansprüche 6 bis 10, mit den weiteren Schritten:

- Einstellen eines dritten Zustands $Z_3$ mit einem dritten elektrischen Feld $E_3 \neq E_2$ im Bereich der Membran, in dem sich durch Veränderung mindestens eine Oberflächenenergie ein vierter Kontaktwinkel $\Theta_4 > \Theta_3$ zwischen der Porenoberfläche und der Grenzfläche einstellt,

- Weiterfördern des ersten Mediums in dem zweiten Volumen.

**12.** Verfahren nach Anspruch 11, **dadurch gekennzeichnet, dass** im zweiten Zustand $Z_2$ der dritte Kontaktwinkel $\Theta_3 < 90°$ und im dritten Zustand $Z_3$ der vierte Kontaktwinkel $\Theta_4 > 90°$ beträgt.

**Claims**

**1.** Fluid system having a substrate in which a fluid line is incorporated, a first medium and a second medium in the fluid line and a diaphragm which geometrically separates the fluid line into a first volume and a second volume and which provides an open-pore microstructure having a pore surface for the passage of a first medium and a second medium between which a boundary face is formed, wherein between the boundary face and the pore surface there is a contact angle,

having electrodes for applying an electrical field in the region of the diaphragm,

wherein the diaphragm in a first state $Z_1$ having a first electrical field $E_1$ has a pore surface which is not wetted or is wetted to a lesser extent by the first medium and a pore surface which is wetted to a greater extent by the second medium so that between the pore surface and the boundary face in the first medium a first contact angle $\Theta_1 > 90°$ is formed, and

wherein the first medium and the second medium and the pore surface have a surface energy of which at least one surface energy can be changed in accordance with the electrical field in such a reversible manner that in a second state $Z_2$ with a second electrical field $E_2 \neq E_1$ a second contact angle $\Theta_2 < \Theta_1$ is produced between the pore surface and the boundary face,

wherein a first of the electrodes is formed by a conductive substrate of the diaphragm or a conductive coating of the diaphragm,

and wherein in the first and the second volume a second electrode is arranged in each case directly adjacent to the diaphragm.

2. Fluid system according to claim 1,
**characterised in that** the pore surface in the first state is hydrophobic, the first medium is a water-based fluid and **in that** the second medium is a gas, in particular air, or an oil-based fluid.

3. Fluid system according to claim 1,
**characterised in that** the pore surface in the first state is lipophobic, the first medium is an oil-based fluid and **in that** the second medium is a gas, in particular air, or a water-based fluid.

4. Fluid system according to any one of the preceding claims,
**characterised by** a pump for conveying the media from the first volume through the diaphragm into the second volume, wherein the pump is configured to convey a constant volume flow $V_c$ up to a maximum conveying pressure $P_{max}$, and
by a pressure sensor which is arranged and configured to detect a pressure change in the first or second volume and to output a pressure change signal.

5. Fluid system according to any one of claims 1 to 3,
**characterised by** a pump for conveying the media from the first volume through the diaphragm into the second volume, wherein the pump is configured to convey at a constant conveying pressure $P_c$, and
by a volume flow sensor which is arranged and configured to detect a volume flow change in the second volume and to output a volume flow change signal.

6. Method for operating a fluid system having a substrate, in which a fluid line is incorporated, a first medium and a second medium and a diaphragm which geometrically separates the fluid line into a first volume and a second volume and which provides an open-pore microstructure having a pore surface, having the steps of:

- adjusting a first state $Z_1$ with a first electrical field $E_1$ in the region of the diaphragm by means of a first electrode which is formed by means of a conductive substrate of the diaphragm or a conductive coating of the diaphragm, and by means of a second electrode which is arranged in the first and second volume in each case directly adjacent to the diaphragm and in which the pore surface, a first medium and a second medium have surface energies and in which the diaphragm has a pore surface which is not wetted or is wetted to a lesser extent by the first medium and a pore surface which is wetted to a greater extent by the second medium,
- conveying the first medium and the second medium, between which a boundary face is formed, from the first volume through the diaphragm into the second volume until the boundary face touches the diaphragm, wherein between the pore surface and the boundary face in the first medium a first contact angle $\Theta_1 > 90°$ is produced and the conveying is stopped whilst the first medium substantially still remains in the first volume and the second medium substantially already remains in the second volume,
- adjusting a second state $Z_2$ with a second electrical field $E_2 \neq E_1$ in the region of the diaphragm by means of the first and the second electrodes, in which at least one surface energy is changed in such a reversible manner that a second contact angle $\Theta_2 < \Theta_1$ between the pore surface and the boundary face is produced,
- continuing to convey the first and the second medium until the first medium is also substantially transferred through the diaphragm into the second volume, wherein
- the first medium has a limited volume and with respect to the conveying direction at the end thereof a second boundary face with respect to a third medium is formed, wherein the continued conveying of the first medium through the diaphragm into the second volume stops when the second boundary face touches the diaphragm and between the second boundary face and the pore surface a third contact angle $\Theta_3$ is produced.

7. Method according to claim 6,
**characterised in that** the conveying is carried out up to a maximum conveying pressure $P_{max}$ at a constant volume flow $V_c$ and **in that** a pressure change in the first or second volume is detected and a pressure change signal is output.

8. Method according to claim 7,

**characterised in that** the first contact angle $\Theta_1$ corresponds to a breakthrough pressure $P_{dhi}$ at which the boundary face passes through the diaphragm and which is greater than the maximum conveying pressure $P_{max}$ and **in that** the second contact angle $\Theta_2$ corresponds to a breakthrough pressure $P_{dlo}$ at which the boundary face passes through the diaphragm and which is less than the maximum conveying pressure $P_{max}$.

9. Method according to claim 6,
**characterised in that** the conveying is carried out at a constant conveying pressure $P_c$ and **in that** a volume flow change in the second volume is detected and a volume flow change signal is output.

10. Method according to claim 9,
**characterised in that** the first contact angle $\Theta_1$ corresponds to a breakthrough pressure $P_{dhi}$ at which the boundary face passes through the diaphragm and which is greater than the constant conveying pressure $P_c$ and **in that** the second contact angle $\Theta_2$ corresponds to a breakthrough pressure $P_{dlo}$ at which the boundary face passes through the diaphragm and which is less than the constant conveying pressure $P_c$,

11. Method according to any one of claims 6 to 10, having the additional steps of:

- adjusting a third state $Z_3$ with a third electrical field $E_3 \neq E_2$ in the region of the diaphragm in which, as a result of changing at least one surface energy, a fourth contact angle $\Theta_4 > \Theta_3$ is produced between the pore surface and the boundary face,
- continuing to convey the first medium in the second volume.

12. Method according to claim 11,
**characterised in that** in the second state $Z_2$ the third contact angle is $\Theta_3 < 90°$ and in the third state $Z_3$ the fourth contact angle is $\Theta_4 > 90°$.

**Revendications**

1. Système fluidique avec un substrat, dans lequel une conduite de fluide est intégrée, avec un premier milieu et un deuxième milieu dans la conduite de fluide, ainsi qu'avec une membrane, laquelle sépare de manière géométrique la conduite de fluide en un premier volume et en un deuxième volume, et laquelle met à disposition une microstructure à pores ouverts avec une surface de pores pour le passage d'un premier milieu et d'un deuxième milieu, entre lesquels une surface limite est conçue ;
selon lequel un angle de contact est formé entre la surface limite et la surface des pores, avec des électrodes en vue de l'application d'un champ électrique dans la zone de la membrane ;
selon lequel la membrane présente, dans un premier état $Z_1$ avec un premier champ électrique $E_1$, une surface de pores non ou moins humidifiante par le premier milieu et une surface de pores plus humidifiante par le deuxième milieu, de telle sorte qu'un premier angle de contact $\Theta_1 > 90°$ se forme dans le premier milieu entre la surface de pores et la surface limite ; et
selon lequel le premier milieu et le deuxième milieu ainsi que la surface des pores présentent une énergie de surface, parmi lesquels au moins une énergie de surface peut être modifiée de manière réversible en fonction du champ électrique, de telle sorte qu'un deuxième angle de contact $\Theta_2 < \Theta_1$ est obtenu entre la surface des pores et la surface limite, dans un deuxième état $Z_2$ avec un deuxième champ électrique $E_2 \neq E_1$ ;
selon lequel une première des électrodes est formée par un substrat conducteur de la membrane ou par un revêtement conducteur de la membrane ; et
selon lequel une deuxième électrode est disposée respectivement dans le premier volume et dans le deuxième volume, à proximité immédiate de la membrane.

2. Système fluidique selon la revendication 1,
**caractérisé en ce que** la surface des pores est hydrophobe dans le premier état, **en ce que** le premier milieu est un liquide à base d'eau ; et
**caractérisé en ce que** le deuxième milieu est un gaz, en particulier de l'air, ou un liquide à base d'huile.

3. Système fluidique selon la revendication 1,
**caractérisé en ce que** la surface des pores est lipophobe dans le premier état, **en ce que** le premier milieu est un liquide à base d'huile ; et
**caractérisé en ce que** le deuxième milieu est un gaz, en particulier de l'air, ou un liquide à base d'eau.

4. Système fluidique selon l'une des revendications ci-dessus,
**caractérisé par** une pompe destinée à la circulation des milieux depuis le premier volume dans le deuxième volume, en passant à travers la membrane ;
selon lequel la pompe est configurée en vue de faire circuler un flux volumique constant $V_c$ jusqu'à une pression de refoulement maximale $P_{max}$ ; et
**caractérisé par** un capteur de pression, lequel est disposé et configuré en vue de détecter une variation de la pression dans le premier volume ou dans le deuxième volume et en vue d'émettre un signal de variation de la pression.

5. Système fluidique selon l'une des revendications 1 à 3,

**caractérisé par** une pompe destinée à la circulation des milieux depuis le premier volume dans le deuxième volume, en passant à travers la membrane ; selon lequel la pompe est configurée en vue de faire circuler une pression de refoulement constante $P_c$ ; et

**caractérisé par** un capteur de flux volumique, lequel est disposé et configuré en vue de détecter une variation du flux volumique dans le deuxième volume et en vue d'émettre un signal de variation du flux volumique.

6. Procédé destiné au fonctionnement d'un système fluidique avec un substrat, dans lequel une conduite de fluide est intégrée, avec un premier milieu et un deuxième milieu, ainsi qu'avec une membrane, laquelle sépare de manière géométrique la conduite de fluide en un premier volume et en un deuxième volume et laquelle met à disposition une microstructure à pores ouverts avec une surface de pores, lequel procédé comprend les phases suivantes :

- la mise en place d'un premier état $Z_1$ avec un premier champ électrique $E_1$ dans la zone de la membrane au moyen d'une première électrode, laquelle est formée par un substrat conducteur de la membrane ou par un revêtement conducteur de la membrane, ainsi qu'au moyen d'une deuxième électrode, laquelle est disposée respectivement dans le premier volume et dans le deuxième volume, à proximité immédiate de la membrane, dans lequel premier état $Z_1$ la surface de pores, le premier milieu et le deuxième milieu présentent des énergies de surface et dans lequel premier état $Z_1$ la membrane présente une surface de pores non ou moins humidifiante par le premier milieu et une surface de pores plus humidifiante par le deuxième milieu ;
- la circulation du premier milieu et du deuxième milieu, entre lesquels est conçue une surface limite, depuis le premier volume dans le deuxième volume en passant à travers la membrane jusqu'à ce que la surface limite entre en contact avec la membrane ; selon lequel un premier angle de contact $\Theta_1 >$ 90° se forme dans le premier milieu entre la surface de pores et la surface limite ; et selon lequel la circulation s'arrête pendant que le premier milieu se trouve encore, pour l'essentiel, dans le premier volume et pendant que le deuxième milieu se trouve déjà, pour l'essentiel, dans le deuxième volume ;
- la mise en place d'un deuxième état $Z_2$ avec un deuxième champ électrique $E_2 \neq E_1$ dans la zone de la membrane, au moyen des premières et des deuxièmes électrodes, dans lequel deuxième état $Z_2$ au moins une énergie de surface varie de manière réversible, de telle sorte qu'un deuxième angle de contact $\Theta_2 < \Theta_1$ est obtenu entre la surface des pores et la surface limite ; et
- la poursuite de la circulation du premier milieu et du deuxième milieu jusqu'à ce que le premier milieu soit, pour l'essentiel, également transféré dans le deuxième volume en passant à travers la membrane ;

selon lequel le premier milieu présente un volume limité et une deuxième surface limite est conçue vis à vis d'un troisième milieu au niveau de son extrémité, par rapport au sens de circulation ; selon lequel la poursuite de la circulation, à travers la membrane, du premier milieu dans le deuxième volume s'arrête quand la deuxième surface limite entre en contact avec la membrane et qu'il en résulte un troisième angle de contact $\Theta_3$ entre la deuxième surface limite et la surface de pores.

7. Procédé selon la revendication 6, **caractérisé en ce que** la circulation a lieu à un flux volumique constant $V_c$ jusqu'à une pression de refoulement maximale $P_{max}$ ; et **caractérisé en ce qu'**une variation de la pression dans le premier volume ou dans le deuxième volume est détectée et un signal de variation de la pression est émis.

8. Procédé selon la revendication 7, **caractérisé en ce que** le premier angle de contact $\Theta_1$ correspond à une pression de rupture $P_{dhi}$, pour laquelle la surface limite pénètre à travers la membrane et laquelle pression de rupture $P_{dhi}$ est supérieure à la pression de refoulement maximale $P_{max}$ ; et **caractérisé en ce que** le deuxième angle de contact $\Theta_2$ correspond à une pression de rupture $P_{dlo}$, pour laquelle la surface limite pénètre à travers la membrane et laquelle pression de rupture $P_{dlo}$ est inférieure à la pression de refoulement maximale $P_{max}$.

9. Procédé selon la revendication 6, **caractérisé en ce que** la circulation a lieu à une pression de refoulement constante $P_c$ ; et **caractérisé en ce qu'**une variation du flux volumique dans le deuxième volume est détectée et un signal de variation du flux volumique est émis.

10. Procédé selon la revendication 9, **caractérisé en ce que** le premier angle de contact $\Theta_1$ correspond à une pression de rupture $P_{dhi}$, pour laquelle la surface limite pénètre à travers la membrane et laquelle pression de rupture $P_{dhi}$ est supérieure à la pression de refoulement constante $P_c$ ; et **caractérisé en ce que** le deuxième angle de contact $\Theta_2$ correspond à une pression de rupture $P_{dlo}$, pour laquelle la surface limite pénètre à travers la membrane et laquelle pression de rupture $P_{dlo}$ est inférieure à la pression de refoulement constante $P_c$.

**11.** Procédé selon l'une des revendications 6 à 10, lequel comprend les autres phases suivantes :

- la mise en place d'un troisième état $Z_3$ avec un troisième champ électrique $E_3 \neq E_2$ dans la zone de la membrane, dans lequel troisième état $Z_3$ un quatrième angle de contact $\Theta_4 > \Theta_3$ est obtenu entre la surface de pores et la surface limite par la variation d'au moins une énergie de surface ; et
- la poursuite de la circulation du premier milieu dans le deuxième volume.

**12.** Procédé selon la revendication 11, **caractérisé en ce que** le troisième angle de contact est de $\Theta_3 < 90°$ dans le deuxième état $Z_2$ et le quatrième angle de contact est de $\Theta_4 > 90°$ dans le troisième état $Z_3$.

Fig. 1A

Fig. 1B

EP 2 830 764 B1

Fig. 2

EP 2 830 764 B1

## Fig. 3A

## Fig. 3B

## Fig. 3C

21

Fig. 4

EP 2 830 764 B1

Fig. 6A

30  32  34

42  ①  P₁  P₂

M3  M1  M2

40  V2

V1

36  38  V=0, z₁

pressure, voltage

① ② ③  ④  ⑤ ⑥  ⑦

p_max  ------without voltage

time

⑦  M3  M1  M2

42  V=0, z₃ = z₁  36

②  M3  M1  M2  32

42  V=0, z₁  36

③  M1  M2  32  M2

V≠0, z₂  36

④  M3  M1  M2  32

V≠0, z₂

⑤  M3  M1  M2  32

V≠0, z₂  42

⑥  M3  M1  M2  32

V=0, z₃ = z₁  42

Fig. 5

Fig. 6B

Fig. 7A

Fig. 7B

Fig. 7C

Fig. 8A

Fig. 8B

Fig. 8C

Fig. 8D

Fig. 8E

Fig. 8F

Fig. 8G

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009045403 A1
- WO 2009094626 A1
- WO 9612540 A1
- WO 9612541 A1
- US 2011266151 A1
- WO 2012018301 A1
- US 6406605 B1
- DE 102006008324 B3
- DE 102005015562 A1